# EUROPÄISCHE PATENTSCHRIFT

(11) **EP 3 936 770 B1**
(45) Veröffentlichungstag und Bekanntmachung des Hinweises auf die Patenterteilung: **27.11.2024**
(21) Anmeldenummer: 21020410.3
(22) Anmeldetag: 11.08.2021
(51) Int. Cl.: F24D 19/10, G05B 13/02, G06N 3/08, G05D 23/19

(54) **HEIZUNGSSYSTEM MIT AUTOMATISCHEM ADAPTIVEM HYDRAULISCHEM ABGLEICH**
HEATING SYSTEM WITH AUTOMATIC ADAPTIVE HYDRAULIC ADJUSTMENT
SYSTÈME DE CHAUFFAGE À ÉQUILIBRAGE HYDRAULIQUE ADAPTATIF AUTOMATIQUE

(30) Priorität: 07.07.2020 DE 102020117945; 29.07.2020 DE 102020120043
(43) Veröffentlichungstag der Anmeldung: 12.01.2022
(73) Patentinhaber: Blossom-IC Intelligent Controls AG, 87700 Memmingen (DE)
(72) Erfinder: SUIC, Orhan, 87700 Memmingen (DE)
(74) Vertreter: Baumann, Rüdiger Walter

(56) Entgegenhaltungen:
- EP-A1- 3 312 698
- EP-A2- 1 936 288
- CN-A- 111 811 016
- DE-A1- 102011 018 698
- DE-A1- 102012 018 778

## Beschreibung

Die Erfindung betrifft ein Heizungssystem mit einem automatischen, adaptieren, hydraulischen Abgleich sowie ein Verfahren zur Durchführung eines automatischen adaptiven hydraulischen Abgleichs in einem Heizungssystem und ein Verfahren zum Trainieren eines künstlichen neuronalen Netzwerks.

Bekannte Heizungssysteme, die zum Temperieren von Räumen zum Einsatz kommen müssen vor der Inbetriebnahme einem mechanischen hydraulischen Abgleich unterzogen werden. Hierbei werden Einstellungen an den Heizungsventilen vorgenommen, die sicherstellen, dass sämtliche Bestandteile des Heizungssystem auf einander abgestimmt sind und somit eine gleichmäßige und zufriedenstellende Beheizung der Räume durchgeführt wird.

Der konventionelle hydraulische Abgleich setzt die rechnerische Ermittlung von SOLL-Durchflussmengen für jedes Heizungsventil im Heizungssystems im Auslegungsfall voraus und zielt darauf ab, eine Überschreitung dieser Werte im realen Betrieb zu vermeiden. Hierfür werden definierte hydraulische Widerstände in das Hydrauliksystem wie beispielsweise statische Drosselelemente, deren Einstellwerte entweder aus berechneten SOLL-Durchflussmengen oder aus unter definierten Lastzuständen gemessenen Durchflussmengen/Differenzdrücken zu bestimmen sind oder dynamisch regelnde Begrenzungseinrichtungen, welche auf die jeweiligen Druckoder Durchfluss-SOLL-Werte einzustellen sind, eingesetzt.

Jedes der Dokumente DE 10 2012 018778 A1, EP 1 936 288 A2 oder DE 10 2011 018698 A1 zeigt ein Heizungssystem mit automatischen adaptativen hydraulischen Abgleich gemäß dem Stand der Technik.

Nachteilig an diesen Systemen ist, dass diese lediglich auf Planungsdaten berechneten Einstellungswerte oftmals nicht der Realität im Gebäude entsprechen. So bleiben beispielsweise die Ausrichtung des Raums, die Nutzung des Raums, die Größe der Heizkörper und die Art und Weise der Heizungsventile und sich daraus ergebende Unterschiede unberücksichtigt. Dies führt dazu, dass oftmals mehr Energie eingesetzt wird, als tatsächlich notwendig wäre, um einen Raum so zu beheizen, dass die vom Nutzer gewünschte Temperatur herrscht.

Die Erfindung hat sich zur Aufgabe gemacht, ein Heizungssystem zur Verfügung zu stellen, bei dem automatisch ein adaptiver hydraulischer Abgleich zwischen den Verbrauchern, d.h. den Heizkörpern durchgeführt wird. Im erfindungsgemäßen Heizungssystem muss somit kein hydraulischer Abgleich mit komplizierten Einstellungen an den einzelnen Heizungsventilen durchgeführt werden. Unmittelbar nach der Installation der Heizungsventile und des diese umfassenden Heizungssystem wird vermittelt durch eine Recheneinheit und basierend auf der gewünschten SOLL-Temperatur für den jeweiligen Raum das Heizungsventil derart eingestellt, dass in optimierter Art und Weise eine angepasste, d.h. adaptive Einstellung der Raumtemperatur über die optimierte Einstellung der Heizungsventilstellung erfolgen kann. Der Abgleich wird während des Betriebs kontinuierlich oder in definierten Intervallen vorgenommen.

Im erfindungsgemäßen Heizungssystem mit einem automatischen adaptiven hydraulischen Abgleich, kommt es initial sowie im laufenden Betrieb wiederholt/fortwährend selbsttätig zur Anpassung der Abgleichsysteme.

Im Zusammenhang mit der vorliegenden Erfindung werden nachfolgend Begriffe kurz erläutert und in den Kontext der Erfindung gestellt:

### Abgleich

Einstellen einer stetig wirkenden Regeleinrichtung, die im späteren Betrieb auf sich ändernde Betriebsbedingungen im hydraulischen System (z. B. Differenzdruck, Temperatur) reagiert, mit dem Ziel, eine Überschreitung des einmalig eingestellten SOLL-Wasserstromes im Auslegungs- und Teillastfall zu vermeiden

### Adaptiver dynamischer Abgleich

Selbsttätiges Ermitteln und fortwährendes bzw. wiederholtes Anpassen eines SOLL-Wertes (z. B. SOLL-Wasserstrom) einer stetig wirkenden Regeleinrichtung durch einen Algorithmus auf Basis von Messgrößen (z. B. Differenzdruck, Durchfluss, Temperatur), wobei im Betrieb auf sich ändernde Betriebsbedingungen im hydraulischen System (z. B. Differenzdruck, Temperatur) reagiert wird, mit dem Ziel, eine Überschreitung des vom Algorithmus vorgegebenen SOLL-Wertes im Auslegungs- und Teillastfall zu vermeiden.

### Heizungsventil

Hydraulisches Stellorgan - z. B. des Raumtemperaturregelkreises und/oder Abgleichsystems - zur Beeinflussung des Mediendurchflusses (sperren, durchlassen, regulieren). Im Rahmen der vorliegenden Erfindung werden Stellorgane entsprechender Funktionalität unabhängig von deren technischem Aufbau Ventil genannt.

Die vorliegende Erfindung bezieht sich vor allem auf Heizungssysteme. Die darin enthaltenen Ausführungen - insbesondere temperaturbasierte Optimierungsstrategien - können in Teilen sinngemäß auf Kühl- sowie Heiz-Kühl-Hybridanlagen übertragen werden, die damit gleichermaßen von der Erfindung umfasst sind. Derartige Kühlanlagen sind beispielsweise Kälteübergabeeinrichtungen - insbesondere Flächenkühlsysteme - oder Hybridanlagen, welche dasselbe Hydrauliksystem zum Heizen und Kühlen nutzen.

Das erfindungsgemäße Heizungssystem mit einem automatischen adaptiven hydraulischen Abgleich von mehrere Wohnungen umfasst wenigstens eine zentrale Heizquelle, beispielsweise einen Brenner, eine Solarthermie-Modul oder vergleichbare Vorrichtungen zum Erzeugen von Heizenergie. Ebenfalls denkbar ist, dass Heizenergie über eine Fernwärmeeinrichtung zur Verfügung gestellt wird, die mehrere Abnehmer versorgt. Das Heizungssystem umfasst darüber hinaus wenigstens einen ersten Verbraucher, beispielsweise einen Heizkörper oder eine Fußbodenheizung, mit jeweils einem lokalen Vorlaufzweig und einen lokalen Rücklaufzweig, wenigstens eine zentrale Umwälzpumpe zur Förderung eines Heizungsmediums von der Heizquelle über eine zentrale Vorlaufleitung zu dem ersten Verbraucher. Das Heizungsmedium kann dann über eine zentrale Rücklaufleitung von dem ersten Verbraucher zurück zur Heizquelle fließen. Ferner ist jeweils ein dem ersten Verbraucher zugeordnetes und in dem jeweiligen Vorlaufzweig angeordnetes ersten Heizungsventil, insbesondere Thermostatventil, mit einem dem ersten Heizungsventil zugeordneten, mit einer ersten Steuer- und Rücckopplungselektronik ausgestatteten ersten Stellantrieb für die Einstellung eines Ventilstellungswertes zur Steuerung eines Volumenstroms des Heizmediums im ersten Verbraucher vorgesehen, wobei der Stellantrieb bevorzugt auf einen Betätigungsstift des Heizungsventils wirkt.

Das Heizungssystem weist ferner eine Erfassungsvorrichtung für einen IST-WERT der Raumtemperatur und eine mit der Erfassungsvorrichtung und dem ersten Stellantrieb gekoppelte Steuereinheit auf. In der Steuereinheit ist ein SOLL-Wert für die Raumtemperatur ablegbar und über die Steuereinheit ein Steuersignal für den Ventilstellungswert an die Steuer- und Rückkopplungselektronik ausgebbar, wonach durch inkrementelle Betätigung des Stellantriebes der SOLL-Wert für die Raumtemperatur einstellbar ist. Bei der Steuereinheit handelt es sich um eine entweder dezentrale oder zentrale Einheit, die in der Lage ist die erfassten Werte für die IST-Temperatur mit den Werten für die SOLL-Raumtemperatur abzugleichen und daraus ein Steuersignal abzuleiten, dass dann an die Steuer und Rückkopplungselektronik ausgegeben wird. Die Steuereinheit kann als physisches Element im jeweils zu beheizenden Raum, in einem Haus oder einem Gebäudekomplex vorgesehen werden. Gleichzeitig besteht auch die Möglichkeit eine virtuelle Steuereinheit, beispielsweise auf einem Server zur Verfügung zu stellen. Cloud Lösungen sind gleichermaßen umfasst.

Mit dem Begriff SOLL-Wert für die Raumtemperatur wird im Zusammenhang mit der vorliegenden Erfindung der Raumtemperaturwert benannt, der entweder seitens des Nutzers eingestellt oder in einem Temperaturprofil abgelegt ist. Dieses Temperaturprofil kann beispielsweise im Tageslauf unterschiedliche Raumtemperaturen vorsehen. Das Heizungssystem stellt diese Temperaturen selbstständig, automatisch ein und überprüft regelmäßig bzw. kontinuierlich den IST-Temperaturwert, um einen Abgleich mit einem SOLL-Wert vorzunehmen. Über die Steuer- und Rückkopplungselektronik ist bei Erreichen des SOLL-Wertes für die Raumtemperatur der jeweils eingestellte Ventilstellungswert an die Steuereinheit rückgebbar. Der adaptive hydraulische Abgleich ist somit durch zeitgesteuerte, insbesondere kontinuierliche und bevorzugt automatische Anpassung des Ventilstellungswertes durchführbar.

Das erfindungsgemäße Heizungssystem kommt somit ohne eine Initialeinstellung der Heizungsventile aus. Hierdurch wird die Einrichtung und Inbetriebnahme des Heizungssystems wesentlich vereinfacht. Beim Betrieb ist das erfindungsgemäße Heizungssystem in der Lage, kontinuierlich und dynamisch auf Temperaturänderungen zu reagieren und kann darüber hinaus der Steuereinheit abgelegte Temperaturprofile kontinuierlich einstellen, überwachen und bedarfsweise nachregulieren. Hierbei ist es auch möglich, unterschiedliche Temperaturen bzw. Temperaturprofile in verschiedenen Räumen zu steuern.

Adaptiv abgleichende Systeme passen die Begrenzung von Durchflussmengen dem momentanen Bedarf an. Charakterisierend sind die selbsttätige und fortwährende bzw. wiederholte Ermittlung des jeweils einzuhaltenden Temperatur-SOLL-Werts in Abhängigkeit vom momentanen Betriebszustand und Bedarf aller Abgleicheinrichtungen/Übergabeeinrichtungen und die druckunabhängige Regelung zur Nichtüberschreitung des SOLL-Wertes. Das komplette Abgleichsystem einschließlich Messund Auswertungseinrichtungen ist dabei insbesondere dauerhaft in der hydraulischen Anlage integriert bzw. mit ihr verbunden. Der temperaturbasierte adaptive hydraulische Abgleich stützt sich im Wesentlichen auf die Messung und Auswertung von Medien- und/oder Raumtemperaturen.

Eine bevorzugte Weiterbildung des Heizungssystems gemäß der Erfindung sieht vor, dass wenigstens ein zweiter Verbraucher vorgesehen ist und die Steuereinheit zur Einstellung des SOLL-Wertes für die Raumtemperatur Steuersignale für eine Einstellung des jeweiligen Ventilstellungswertes an die Steuer- und Rückkopplungselektronik der jeweiligen Verbraucher ausgibt. Über die Steuereinheit ist nach Abgleich der Ventilstellungswerte von erstem und zweitem Verbraucher eine Ausgabe individueller Ventilstellungswerte an die Steuer- und Rückkopplungselektronik von erstem und zweitem Verbraucher zur Einstellung der Raumtemperatur vorgesehen. Im Heizungssystem kann somit ein Abgleich zwischen verschiedenen Verbrauchern vorgenommen werden und somit die Einstellung der einzelnen Verbraucher anhand dieser Abstimmung erfolgen. Somit ist das ins System insgesamt wesentlich flexibler und kann auch weitere Einflussfaktoren berücksichtigen. Die Steuerung erfolgt im Wesentlichen über die erfasste IST- Temperatur im Raum und deren Abstimmung mit der gewünschten bzw. geforderten SOLL- Temperatur.

Eine bevorzugte Ausführungsform des erfindungsgemäßen Heizungssystems sieht vor, dass die Verbraucher in getrennten Räumen angeordnet sind und eine Kopplung direkt mit einer zentralen Steuereinheit oder über eine jeweils den Verbrauchern zugeordnete Steuereinheit vorgesehen ist. In dieser Ausführungsform besteht die Möglichkeit, dass neben einer zentralen, das heißt mehrere Verbrauchseinheiten zusammenfassenden Steuereinheit, eine dezentrale Steuereinheit auf Raumbasis, die nur mit einem oder wenigen Verbrauchern gekoppelt ist zum Einsatz kommt. Ebenfalls möglich ist eine Bündelung der dezentralen Steuereinheiten und die übergeordnete Steuerung des Heizungssystems größerer Komplexe über eine serverbasierte Lösung für die Steuereinheit bzw. Steuereinheiten.

Eine Sonderform des erfindungsgemäßen Heizungssystems stellt eine Fußbodenheizung dar. Hierbei sind mehrere an einem Verteiler angeordnete Ventile vorgesehen, die die einzelnen Heizkreise der Fußbodenheizung regulieren. Gehäuses vorgesehen, dass sich die Ventile der einzelnen Heizkreise untereinander abgleichen und somit flächendeckend die gleiche Temperatur in allen verbundenen Heizkreisen eingestellt wird. Hierzu können zusätzlich Temperaturfühler an den Rück- oder Vorlaufleitungen der einzelnen Heizkreise der Fußbodenheizung vorgesehen werden, die einen exakten Abgleich der Temperatur ermöglichen, da hieraus weitere Messwerte abgeleitet werden, die an die Steuereinheit zurückgegeben und dort bei der Anpassung der Ventilstellwert unter Berücksichtigung der Werte aus den Raumthermostaten bzw. Messfühlern im Gebäude miteinbezogen werden. Über die Steuereinheiten wird auch eine Kommunikation zwischen den einzelnen Ventilen am Verteiler ermöglicht. Über eine einzige Steuereinheit können dabei gleichzeitig mehrere Stellantriebe von Ventilen in einem Fußbodenverteiler gesteuert werden. Eine Weiterbildung der Erfindung sieht vor, dass das Heizungssystem in ein mehrere Abschnitte aufweisendes Verteilnetz integriert ist, wobei die Abschnitte unabhängige Heizsträngen mit jeweils wenigstens einem Heizungssystem aufweisen. Vorgesehen ist hierbei auch ein Abgleich zwischen den Heizungssystem über die Steuereinheiten in den einzelnen Heizsträngen bzw. individuellen Heizungssystemen.

Als vorteilhaft wird angesehen, wenn im erfindungsgemäßen Heizungssystem das Verteilnetz wenigstens eine Netzsteuereinheit für einen automatischen dynamischen hydraulischen Abgleich im gesamten Verteilnetz aufweist. Die Netzsteuereinheit kann dabei unmittelbar oder mittelbar über die Steuereinheiten der jeweiligen Heizungssysteme oder über zentrale Steuereinheiten, beispielsweise von einzelnen Heizsträngen, die Heizungssysteme einzeln, d.h. unabhängig voneinander, oder nach einem übergeordneten Abgleich steuern.

Grundsätzlich erfolgt eine temperaturabhängige Steuerung des Heizungssystems gemäß der vorliegenden Erfindung. In diesem Zusammenhang erweist es sich als vorteilhaft, wenn in der Netzsteuereinheit, den zentralen Steuereinheiten und/oder den Steuereinheiten einzelner Einheiten des Heizungssystems ein thermische Zeitverhalten, das heißt ein definierter Verlauf der Raumtemperatur, beispielsweise anhand von tageszeitlichen oder jahreszeitlichen Rahmenbedingungen, über abrufbare SOLL-Wert-Profile für die Raumtemperatur einstellbar ist und der automatische adaptive hydraulische Abgleich in Abhängigkeit von diesen SOLL-Wert-Profilen durchführbar ist.

Als besonders günstig erweist es sich im Zusammenhang mit der zuvor beschriebenen Ausführungsform des Heizungssystems, wenn eine Anpassung des thermischen Zeitverhaltens in Abhängigkeit von der Tageszeit, der Raumnutzung, der Außentemperatur, den jahreszeitlich bedingten Temperaturverläufen, Raumausrichtung und/oder -ausgestaltung vorgenommen wird. Die Steuereinheit ist dabei in der Lage, die erfasste IST-Temperatur mit der SOLL-Temperatur unter Berücksichtigung der zusätzlichen Einflussfaktoren abzugleichen und daraus dann einen Ventilstellungswert abzuleiten und an die einzelnen Heizungsventile der jeweiligen Verbraucher auszugeben.

Das erfindungsgemäße Heizungssystem zeichnet sich in einer bevorzugten Ausführungsform dadurch aus, dass der Stellantrieb als Schrittmotor ausgebildet ist. Dieser Schrittmotor weist bevorzugt eine Schrittauflösung von zwischen O und 1000 Schritten, insbesondere von zwischen O und 800 Schritten, bevorzugt von zwischen O und 600 Schritten, besonders bevorzugt von zwischen O und 300 Schritten auf und erlaubt somit die inkrementelle Einstellung mit hoher Auflösung. Der Schrittmotor kann dabei unabhängig vom Ventil vorgesehen werden. Auch lässt sich der Schrittmotor mit Standardventilen kombinieren und kann auch nachträglich bei bestehenden Ventilen ergänzt werden, stellt somit die Möglichkeit zur Nachrüstung bestehender Ventile dar. In einer vorteilhaften Weiterbildung der Erfindung ist vorgesehen, dass das Heizungsventil als Schrittmotorventil ausgebildet ist und der Stellantrieb als Teil des Schrittmotorventils vorgesehen ist.

Zur Steuerung des Heizungssystems wird es als günstig angesehen, wenn zusätzlich zu den SOLL-Wert-Profilen für die Raumtemperatur eine SOLL-Temperaturrampe vorgesehen ist, die die Geschwindigkeit vorgibt, innerhalb derer die SOLL-Werte für die Raumtemperatur erreicht werden. Die Betätigungsgeschwindigkeit des Stellantriebes wird dabei auch in Abhängigkeit von der SOLL-Temperaturrampe gesteuert. Dies kann insbesondere beim Abgleich von mehreren Räumen mit unterschiedlicher Ausgangs- bzw. IST- Temperatur zum Tragen, die zu einem definierten Ziel Zeitpunkt gleichzeitig die geforderte SOLL-Temperatur erreichen sollen.

Im erfindungsgemäßen Heizungssystem ist eine Erfassungseinrichtung für die Raumtemperatur vorgesehen. Diese kann verschiedene Konfigurationen aufweisen. So ist es beispielsweise denkbar, dass die Erfassungseinrichtung als unabhängige Einheit, beispielsweise als Messfühler oder Raumthermostat vorgesehen ist. Alternativ oder zusätzlich kann die Erfassungseinrichtung auch in dem Heizungsventil direkt oder in einem Raumthermostat bzw. einem oder mehreren im Raum angeordneten Messfühlern angeordnet werden. Die Erfassungseinrichtung ist somit entweder als integrierte oder als eigenständige bzw. unabhängige Temperaturmessvorrichtung ausgebildet und entweder Teil der Steuereinheit oder mit dieser datentechnisch gekoppelt. In einer weiteren Ausführungsform besteht die Möglichkeit, dass die Erfassungseinrichtung auch einen Sensor für die Raumnutzung umfasst. Dies bedeutet, dass nur bei einer bestimmten, vordefinierten Nutzung des Raumes eine Aktivierung des gesamten Systems stattfindet. Hierdurch wird beispielsweise erfasst, ob sich Personen im Raum befinden und sich dort bewegen. Nur bei einer bestimmten Aktivität im Raum kommt es dann zur Regulierung der Raumtemperatur über das erfindungsgemäße Heizungssystem. Ausgeschlossen wird hierbei, dass beispielsweise sich im Raum bewegende Haustiere als Auslöser für die Aktivität des Heizungssystems agieren. Auch bei ruhenden Personen, beispielsweise während der Schlafphase kommt es nicht zur Aktivierung des Heizungssystems, da der Sensor in der Lage ist die entsprechenden Aktivitäten zu unterscheiden und ausgehend von diesen und mit einem hinterlegten Bewegungsprofil, ein Aktivierungssignal an das Heizungssystem auszugeben.

Vorteilhafterweise ist die Kopplung von Erfassungsvorrichtungen, Stellantrieben und jeweiliger Steuereinheit kabellos, insbesondere über W-LAN, Funk, Bluetooth oder ein Telefon- oder Mobilfunknetz vorgesehen. Hierbei kann auch eine direkte Ankopplung an einen Router oder die Verbindung über ein sogenanntes Gateway erfolgen.

In den erfindungsgemäßen Heizungssystemen ist vorgesehen, dass die jeweilige Netzsteuereinheit, die Steuereinheit und/oder die zentrale Steuereinheit dezentral angeordnet und/oder in ein Datennetzwerk eingebunden vorgesehen ist. So besteht beispielsweise die Möglichkeit, dass die jeweilige Datenerfassung, Datenumsetzung und Ausgabe von Steuersignalen auf einem dezentralen Server, einem virtuellen Server oder in einer webbasierten *cloud* Funktion erfolgt.

Für die Fernadministration und Überwachung sowie für die Erfassung von Verbrauchswerten erweist es sich als besonders vorteilhaft, wenn die jeweilige Netzsteuereinheit, die Steuereinheit und/oder die zentrale Steuereinheit als auf einem Server oder virtuellen Server betreibbar ausgebildet ist. Somit kann von einer entsprechenden Steuerwarte aus Zugriff auf mehrere Steuereinheiten erfolgen. Auch ist es möglich eine Vernetzung einzelner Steuereinheiten über diesen Server vorzunehmen, so dass der adaptive hydraulische Abgleich über eine größere Einheit, beispielsweise ein Gebäude oder Gebäudekomplex oder mehrere, miteinander verbundene Heizstränge, die beispielsweise von der gleichen Wärmequelle versorgt werden, durchgeführt werden kann. Auch besteht eine verbesserte Möglichkeit zur Fehleranalyse und Behebung von Störungen. All dies kann *remote,* das heißt per Fernwartung, erfolgen.

Wird durch die Steuereinheiten festgestellt, dass die Einstellung der SOLL-Werte für die Raumtemperatur mit der zur Verfügung stehenden Wärmemenge bzw. Durchlaufgeschwindigkeit im Heizungssystem nicht möglich ist und auch über einen weitergehenden Abgleich zwischen den vorhandenen Heizungssystemen bzw. Verbrauchern dies nicht behoben werden kann, so erweist es sich als günstig, wenn über die jeweilige Netzsteuereinheit, die Steuereinheit und/oder die zentrale Steuereinheit bedarfsweise ein Steuersignal für die Heizquelle und/oder die Umwälzpumpe zur Erhöhung der jeweiligen Heiz- oder Pumpleistung ausgebbar ist. Im umgekehrten Fall kann das Steuersignal selbstverständlich auch zu einer Absenkung d.h. Drosselung der Heiz- oder Pumpleistung ausgegeben werden, wenn festgestellt wird, dass die Pumpleistung zu hoch ist, und daher weniger Heizmedium benötigt wird, um die jeweiligen SOLL-Werte für die Raumtemperatur zu erreichen. In einer weiteren Konfiguration weist die Heizquelle, in der Regel der Brenner, und/oder die Umwälzpumpe eine Schnittstelle zur jeweiligen Steuereinheit auf. Selbstverständlich ist es auch möglich, dass die Heizquelle und/oder die Umwälzpumpe jeweils eigene oder gemeinsame Steuereinheiten aufweisen, die in das Heizungssystem integriert sind und mit dem Gesamtsystem kommunizieren. Somit können auch von der Heizquelle und/oder der Umwälzpumpe Signalwerte ausgegeben werden, die zur Steuerung des Heizungssystems dienen bzw. können die Steuereinheiten Signale an die Heizquelle bzw. die Umwälzpumpe ausgeben, um deren Leistung zu erhöhen bzw. zu drosseln, sofern dies im Heizungssystem notwendig ist.

Gleichermaßen von erfinderischer Bedeutung ist ein Verfahren zur Durchführung eines adaptiven hydraulischen Abgleichs in einem Heizungssystem, nach Anspruch 6 insbesondere zum Steuern eines Heizungssystems, insbesondere einem Heizungssystem wie zuvor beschrieben. Das Verfahren ist dabei nicht auf Heizungssysteme beschränkt, sondern kann auch mit kühl bzw. Klimatisierungssystemen eingesetzt werden. Eine reine Be- schränkung der Erfindung auf Heizsystem ist nicht gegeben, Kühl- bzw. Klimatisie- rungsysteme sind gleichermaßen umfasst. Das Verfahren umfasst dabei die Schritte:
a. Erfassen eines aktuellen IST-Wertes der Raumtemperatur und Weitergabe des IST-Wertes an eine Steuereinheit,
b. Abgleich des IST-Wertes mit einem in der Steuereinheit abgelegten SOLL-Wertes für die Raumtemperatur,
c. Ableitung eines Ventilstellungswert aus der Abweichung zwischen SOLL- und IST-Wert,
d. Ausgabe eines Steuersignals an eine einem Heizungsventil zugeordnete Steuerund Rückkopplungselektronik,
e. Betätigung durch die Steuer- und Rückkopplungselektronik eines Stellantriebes des Heizungsventils zur Einstellung des Ventilstellungswertes am Heizungsventil,
f. Rückgabe des Ventilstellungswertes an die Steuereinheit,
g. Wiederholung der Schritte a.) bis f.) bis zur Erreichung des SOLL-Wertes für die Raumtemperatur.
wobei der SOLL-Wert für die Raumtemperatur ein thermisches Zeitverhalten, insbesondere in Abhängigkeit von der Tageszeit, der Raumnutzung, der Außentemperatur, den jahreszeitlich bedingten Temperaturverläufen, Raumausrichtung und/oder -ausgestaltung abbildet. Anhand der jeweils erfassten IST-Werte und den geforderten SOLL-Werten kann im Verfahren eine Vorherbestimmung des jeweils notwendigen Zeitraumes erfolgen, der bis zur Erreichung des SOLL-Wertes für die Raumtemperatur notwendig ist. Anhand dieses Wertes, der ebenfalls mit einem entsprechenden SOLL-Wert abgeglichen wird, kann dann der Ventilstellungswert an die Steuereinheit ausgegeben werden. So kann beispielsweise vorgesehen werden, dass zunächst eine Übersteuerung, das heißt weitere Öffnung Heizungsventils erfolgt, um zügig den geforderten SOLL-Wert zu erreichen. Die Stellgeschwindigkeit und die Stellgröße werden in der Steuereinheit berechnet und dann als Steuerwert an die Steuer- und Rückkopplungselektronik des Stellantriebes ausgegeben. Auch in der Steuereinheit erfolgt eine Abstimmung zwischen dem aktuellen Ventilstellungswertes und dem vorher berechneten bzw. voreingestellten Wert. In der Steuereinheit wird mittels eines entsprechenden Algorithmus eine kontinuierliche Anpassung und Verbesserung der jeweiligen Werte, die an die Steuer- und Rückkopplungselektronik ausgegeben werden, vorgenommen. Das System ist selbstlernend ausgeführt.

Das erfindungsgemäße Verfahren zeichnete sich weiterhin dadurch aus, dass der Abgleich kontinuierlich oder in definierten Zeitintervallen erfolgt. D.h., eine Erfassung der jeweiligen IST-Temperatur erfolgt beispielsweise in Zeitintervallen von 1, 5 und 10 Minuten, bevorzugt in Zeitintervallen von zwischen 1 und 10 bzw. 15 Minuten oder in durch den Nutzer einstellbaren Zeitintervallen.

Im erfindungsgemäßen Verfahren ist vorgesehen, dass mehrere miteinander in Verbindung stehende Heizungsventile vorhanden sind und die Steuereinheit die Stellantriebe der jeweiligen Heizungsventile derart steuert, dass der SOLL-Wert durch individuelle Einstellung der Ventilstellungswerte der jeweiligen Heizungsventile erreicht wird, wobei insbesondere ein unabhängiges Öffnen und/oder Schließen der jeweiligen Heizungsventile durchgeführt wird, das jedoch über das gesamte Heizungssystem abgestimmt erfolgt. Das unabhängige Öffnen und/oder Schließen erfolgt dabei bevorzugt schrittweise.

Eine vorteilhafte Weiterbildung des Verfahrens sieht vor, dass die Steuerung bzw. die jeweilige Steuereinheit beim Abgleich unterschiedliche an den Heizungsventilen auftretende Lastanfälle, insbesondere Drücke, berücksichtigt. Ebenfalls berücksichtigt wird die Dimension des jeweiligen Heizkörpers. Das Verfahren ist in der Lage eine Unter- bzw. Überdimensionierung des Heizkörpers zu erkennen und diesen an die Steuereinheit zurückzugeben. Die Erkennung erfolgt dabei über das Ansprechverhalten des jeweiligen Heizkörperventils und die Zeit bis zum Erreichen eines SOLL-Temperaturwertes. Die jeweiligen Werte für die Heizkörper bzw. Wärmeabnehmer können in der Steuereinheit abgelegt und bei der Anpassung des Abgleichverhaltens als Einflussgröße berücksichtigt werden. Insbesondere kann vorgesehen werden, dass der Druck im Heizungssystem indirekt über die Temperatursteuerung automatisch reguliert wird.

In einer weiteren Ausführungsform des erfindungsgemäßen Verfahrens sind in der Steuereinheit Temperaturrampen für die Erreichung der SOLL-Temperatur hinterlegt und eine Steuerung der Stellantriebe erfolgt in Abhängigkeit von den Temperaturrampen. Selbstverständlich werden hierbei auch die anderen Einflussgrößen auf die Raumtemperatur berücksichtigt.

Bevorzugt erfolgt im erfindungsgemäßen Verfahren eine schrittweise Betätigung des Stellantriebes mit einer Schrittauflösung von zwischen O und 1000 Schritten, insbesondere von zwischen O und 800 Schritten, bevorzugt von zwischen O und 600 Schritten, besonders bevorzugt von zwischen O und 300 Schritten.

Eine vorteilhafte Weiterbildung des Verfahrens sieht vor, dass ein adaptiver hydraulischer Abgleich in einem mit einem Verteilnetz ausgestatteten Gebäudeheizungssystem durchgeführt wird. Die vorgenannten Verfahrensschritte a.) bis f.) werden dabei jeweils in einzelnen Abschnitten eines Verteilnetzes durchgeführt und Steuersignale für diese berechnet und ausgegeben. Der Abgleich für das Gesamtnetz erfolgt bevorzugt über eine Netzsteuereinheit.

Als günstig wird in diesem Zusammenhang angesehen, wenn das Verteilnetz mehrere Steuereinheiten und/oder Zentralsteuereinheiten aufweist und eine datentechnische Kopplung der Netzsteuereinheit mit den mehreren Steuereinheiten und/oder Zentralsteuereinheiten vorgesehen ist. Somit besteht die Möglichkeit, dass mehrere Steuereinheiten oder Zentralsteuereinheiten, die einzelne Heizstränge steuern, in einem System zusammengefasst und von einer Netzsteuereinheit einheitenübergreifend gesteuert werden. Es kann somit nicht nur ein Abgleich innerhalb des gleichen Heizstranges, der gleichen Wohneinheit oder der gleichen Gebäudeeinheit sondern über einen größeren Gebäudekomplex durchgeführt werden. In diesem Zusammenhang besteht die Möglichkeit über das Verfahren neben der Vereinfachung der Steuerung und der Durchführung des adaptiv hydraulischen Abgleiches auch eine entsprechende Verlagerung des Energiebedarfes zu steuern, die insgesamt zu einer Reduzierung des Gesamtenergiebedarfes führt, da nur bedarfsweise Wärmeenergie zur Verfügung gestellt werden muss und demnach eine Steuerung der Brenner und Pumpenleistungen punktuell und bedarfsabhängig vorgenommen werden kann. Somit werden Leerläufe oder Überkapazitäten verhindert.

In diesem Zusammenhang erweist es sich als besonders günstig, wenn das Verteilnetz und/oder die Abschnitte mehrere insbesondere von einer zentralen Heizquelle versorgte Heizstränge aufweisen und die wenigstens eine Netzsteuereinheit und/oder mehreren Steuereinheiten und/oder Zentralsteuereinheiten den Abgleich über die Heizstränge hinweg durchführt bzw. durchführen.

Dabei gibt die Netzsteuereinheit die Steuersignale insbesondere wahlweise direkt oder über die Steuereinheiten und/oder Zentralsteuereinheiten an die Steuer- und Rückkopplungselektronik der Heizungsventile aus. Je nachdem, welcher Lastanfall berechnet wird, um alle Verbraucher gleichmäßig mit Wärmeenergie zu versorgen, kann somit über die Zentralsteuereinheiten durch Abgleich von mehreren Heizungsventilen und den dort anstehenden Drücken bzw. Lasten ein Abgleich vorgenommen werden. Es besteht somit die Möglichkeit die Heizungssteuerung insgesamt zu optimieren und bedarfsweise so anzupassen, dass keine überschüssige Energie verbraucht wird. Insgesamt kann das Heizungssystem aufgrund des erfindungsgemäßen Verfahrens ökonomischer, effizienter und umweltfreundlicher betrieben werden.

Als vorteilhaft erweist sich, wenn die jeweilige Netzsteuereinheit, die Steuereinheiten und/oder die Zentralsteuereinheiten, um den Soll-Wert zu erreichen und in Abhängigkeit vom dafür jeweils notwendigen Lastanfall bedarfsweise ein Steuersignal für die Heizquelle und/oder die Umwälzpumpe zur Erhöhung oder Absenkung einer Heiz- und/oder Pumpleistung ausgeben. Hierbei ist die Möglichkeit umfasst, dass entweder die Netzsteuereinheit oder die zentralen bzw. dezentralen Steuereinheiten direkt mit der Pumpe bzw. der Kesselsteuerung kommunizieren. Im Zuge des Abgleichs, kann die Bedarfsanforderung verschiedener Untereinheiten in den Steuereinheiten gebündelt und an die jeweiligen Bereitsteller von Wärmeenergie bzw. die damit zusammenhängenden Pumpen weitergegeben werden. Es kann somit zunächst versucht werden, im System durch entsprechende Steuerung der Heizungsventile die unterschiedlichen Lastanfälle abzudecken. Gelingt dies nicht in ausreichender Art und Weise, um zur Einstellung der gewünschten SOLL-Werte für die Raumtemperatur zu gelangen, geben die Steuereinheiten dann die jeweiligen Signale an den Heizkessel bzw. die Pumpensteuerung aus und bewirken damit eine Erhöhung von deren Leistung, so dass sämtliche Anforderungen seitens der Steuereinheiten berücksichtigt und ein SOLL-Wert für die Raumtemperatur wie vorgesehen eingestellt werden kann. Das Steuersignal an den Heizkessel bzw. die Pumpensteuerung berücksichtigt dabei zum einen die im System vorhandenen Verbraucher, wie auch die jeweiligen Temperaturprofile bzw. angeforderten SOLL-Temperaturen. Hierbei ist es auch möglich, unterschiedliche Temperaturen bzw. Temperaturprofile in verschiedenen Räumen zu steuern und die zur Verfügung stehende Menge an Heizmedium so zu verteilen, dass die SOLL-Temperaturen in den Räumen zügig erreicht und über den jeweils vorgesehenen Zeitraum gehalten werden. Heizkessel bzw. Pumpe(n) können eigene Steuereinheiten aufweisen, die mit dem Gesamtsystem kommunizieren. Möglich ist jedoch auch, dass die Pumpe(n) bzw. der Kessel eine Schnittstelle aufweisen und darüber in das Heizungssystem integriert und mit dort vorgesehenen Steuereinheiten gekoppelt werden können.

Gleichzeitig werden hier jedoch auch zusätzliche Parameter wie zum Beispiel die Jahreszeit, die Ausrichtung des jeweiligen Raumes, die Tageszeit oder die Größe der zu beheizenden Räume bzw. die Dimension der zur Verfügung stehenden Heizkörper berücksichtigt. Der in den Steuereinheiten abgelegte Algorithmus errechnet aus die- sen Werten die Steuersignale für die Verstellung der Heizungsventile und damit die Anpassung der Öffnungs bzw. Schlussweiten der Ventile und damit der Durchlauf- menge und Durchlaufgeschwindigkeit des Heizmediums. Durch Abgleich sämtlicher Parameter kann somit das Heizungssystem optimiert werden. Neben der Vermei- dung von Lastspitzen wird dabei auch die Einsparung von Energie erreicht, da eine bedarfsweise Anpassung des Heizungssystems auf einfache Art und Weise erfolgen kann.

Als günstig erweist sich in diesem Zusammenhang, wenn eine Weiterleitung der Steuersignale kabellos, insbesondere über eine W-LAN-Verbindung, Funk, Bluetooth oder ein Telefon- oder Mobilfunknetz erfolgt. Dabei sind die jeweilige Netzsteuereinheit, die Steuereinheiten und/oder die Zentralsteuereinheiten dezentral vorgesehen und/oder in ein Datennetzwerk eingebunden. Alternativ hierzu können sämtliche Steuereinheiten auch auf einem Server oder virtuellen Server betrieben werden, so dass eine webbasierte oder cloud-basierte Durchführung des Verfahrens und damit die Steuerung eines Heizungssystems möglich ist. In diesem Zusammenhang erweist es sich als vorteilhaft, wenn die jeweilige Netzsteuereinheit, die Steuereinheit und/oder die zentrale Steuereinheit auf einem Server oder virtuellen Server betrieben wird.

Sämtliche relevanten Parameter des Heizungssystems werden kontinuierlich erfasst und gespeichert. In diesem Zusammenhang ist es vorgesehen, dass Informationen, wie beispielsweise Nutzungsdaten, Performancedaten und Verbrauchswerte, über die Funktion des Heizungssystems über ein Anzeigegerät dargestellt und für einen Nutzer ausgegeben werden, so dass dieser das Heizungssystem überwachen kann. Auch ist die Funktion zur Verfügung gestellt, dass die Parameter des Heizungssystems über ein Softwareprodukt, beispielsweise eine App oder in einer Browseroberfläche durch einen Nutzer angepasst und in das Heizungssystem zurückgespielt werden können. Daneben können auch Störungen, Fehlfunktionen oder Ausfälle an den Nutzer gemeldet und über ein grafisches Interface angezeigt werden. Hierzu zählen beispielsweise auch Warnmeldungen wie Leckagen im Heizungssystem, die beispielsweise durch einen Rohrbruch oder eine sonstige Beschädigung der Leitungen ausgelöst werden. Über die Steuereinheiten kann auch eine Einbindung des Heizungssystems in eine sogenannte Smarthome Umgebung, das heißt in eine digitale Gebäudeüberwachung bzw. -steuerung, erfolgen. Dies erlaubt die Steuerung des Heizungssystems als Komponente einer übergeordneten Gebäudesteuerung. In diesem Zusammenhang denkbar und vorgesehen ist auch eine Synchronisation zwischen Browsern, Desktopgeräten und Mobilgeräten, wie beispielsweise Mobiltelefonen oder Tabletcomputer. Dem Nutzer wird somit die Möglichkeit zur Verfügung gestellt, jederzeit und ortsunabhängig eine Überwachung und Anpassung des Heizungssystems vorzunehmen.

Das erfindungsgemäße Verfahren umfasst auch die gleichzeitige Steuerung mehrerer Heizungssysteme und/oder Verteilernetze über einen Server oder ein Netzwerk.

Das erfindungsgemäße Heizungssystem ist bevorzugt als selbstlernendes System ausgebildet. Daher ist gleichermaßen von der Erfindung ein Verfahren zum Trainieren eines künstlichen neuronalen Netzwerks **(KNN),** insbesondere zum Steuern eines Heizungssystems und zur Modifikation des vorbeschreiben Verfahrens, welches mindestens einen Ventilstellungswert für die Erreichung eines SOLL-Wertes einer Raumtemperatur in einem Heizungssystem vorhersagt, umfasst. Das Verhalten des **KNN** ist durch einen Satz Parameter charakterisiert, die beispielsweise die Gewichte beinhalten können, mit denen die einem Neuron, und/oder einer sonstigen Recheneinheit, jeweils zugeführten Eingaben zu einer Aktivierung des Neurons verrechnet werden. Im mehrere Schritte umfassenden Verfahren wird zunächst eine Menge Lern-Datensätze bereitgestellt, wobei jeder Lern-Datensatz für einen Ventilstellungswert einen Satz Kenngrößen, der die Erreichung eines SOLL-Wertes einer Raumtemperatur charakterisiert und mindestens ein Maß für die inkrementelle Betätigung des Stellantriebes, welcher zur Erreichung eines Öffnungswertes des Heizungsventil führt, umfasst. Dem **KNN** werden für jeden Lern-Datensatz jeweils der darin enthaltene Satz Kenngrößen und das darin enthaltene Maß für die inkrementelle Betätigung des Stellantriebes als Eingaben zugeführt, um eine Vorhersage und/oder Klassifikation für den mindestens einen Öffnungswertes des Heizungsventils als Ausgabe zu erhalten. Die Vorhersage und/oder Klassifikation für den Öffnungswert des Heizungsventils wird dann mit dem im Lern-Datensatz enthaltenen Wert für den Öffnungswert des Heizungsventils verglichen. Es wird ferner eine inkrementelle Betätigung des Stellantriebes ausgewertet, die von einer in dem Vergleich ermittelten Abweichung abhängt. Die Parameter, und/oder die Lern-Datensätze des KNN werden mit dem Optimierungsziel angepasst, den Wert der inkrementellen Betätigung des Stellantriebes zu verbessern. Hierdurch wird die Reaktion auf geänderte Umgebungsparameter vorhergesagt bzw. vorhersagbar. Das entsprechend trainierte KNN kann somit Änderungen, die sich aus Variation der jeweiligen Eingangsparameter ergeben antizipieren und somit bereits voreilend auf die geänderten Bedingungen reagieren, um die SOLL-Werte zügiger und genauer zu erreichen.

Im erfindungsgemäßen Verfahren umfasst der Lern-Datensatz zusätzlich eine Identifikation des Verbauungsortes des Heizungsventils bzw. der Heizungsventile in einem Heizungssystem und/oder eine Identifikation der Position des Heizungssystem in einem Heizstrang oder einer übergeordneten Heizungsanlage und/oder ein Maß für die Umgebungstemperatur zum Zeitpunkt der Festlegung des Öffnungswert des Heizungsventils und/oder eine Information dahingehend, wie das Heizungssystem aufgebaut ist und/oder eine Information dahingehend, wie sich der Lastanfall im Heizungssystem verhält und/oder zumindest auszugsweise Planungsdaten für die Heizstränge oder das zu beheizende Gebäude oder den zu beheizenden Raum und/oder eine Information über die im Heizungssystem vorhandene und miteinander gekoppelten Heizventile und/oder eine Information dahingehend, zu welchem Anteil eine Gesamtwärmemenge oder ein Druckanfall im Heizungssystem am jeweiligen Heizungsventil zur Verfügung steht oder zur Verfügung gestellt werden kann und/oder eine Information dahingehend, welche Maximalleistung der dem Heizungssystem zugeordnete Brenner oder die dem Heizungssystem zugeordnete Wärmepumpe zur Verfügung stellen kann. Diese Parameter des Lern-Datensatzes können als weitere Eingaben dem KNN zugeführt werden und optimieren somit die Trainingsleistung während des Betriebs des Heizungssystems.

Die Erfindung umfasst auch ein künstliches neuronales Netzwerk KNN, das mit dem Verfahren wie zuvor beschrieben trainiert wurde sowie einen das KNN charakterisierenden Datensatz, der als Ergebnis des vorgenannten Verfahrens erhalten wurde.

Des Weiteren umfasst die Erfindung ein auf dem KNN basierendes Verfahren zur Vorhersage und/oder Klassifikation des Ventilstellwertes eines jeweiligen Heizungsventils in einem Heizungssystem. Dabei wird ein Satz Kenngrößen, der den geforderten SOLL-Wert der Raumtemperatur charakterisiert, ermittelt; mindestens ein Maß für den Ventilstellwert jedes Heizungsventils in einem Heizungssystem ermittelt und diese Kenngrößen und das Maß für den Ventilstellwert eines jeweiligen Heizungsventils in einem Heizungssystem dem trainierten KNN als Eingaben zugeführt. Schließlich wird mindestens eine Vorhersage und/oder Klassifikation für ein Maß des Ventilstellwertes für die Erreichung des SOLL-Wertes der Temperatur im jeweiligen Heizungssystem oder Heizstrang als Ausgabe von dem KNN abgerufen und über die Steuereinheit an die Heizungsventile bzw. die dort vorgesehene Steuer- und Rücckopplungselektronik ausgegeben. Diese bewirkt dann eine Betätigung des entsprechenden Stellantriebes zur Einstellung des errechneten Ventilstellwertes. Ausgehend von beispielsweise zufälligen Startwerten entwickeln sich im Laufe eines solchen Trainings die Parameter des KNN, sodass das KNN für die in jedem Lern-Datensatz enthaltenen Kenngrößen in Verbindung mit dem jeweiligen SOLL-Wertes der Temperatur das im Lern-Datensatz enthaltene Maß für den Ventilstellwert eines jeweiligen Heizungsventils mehr oder weniger gut voraussagt und anschließend durch die Steuereinheiten umsetzt.

Im vorgenannten Verfahren wird dem KNN bevorzugt zusätzlich eine Identifikation des Orts, an dem mindestens ein Heizventil verbaut wurde und/oder ein Maß für die Umgebungstemperatur am Ort der Verbauung des Heizventils als Eingaben zugeführt.

Im erfindungsgemäßen Verfahren wird in Antwort darauf, dass mit einem für einen ersten Verbauungsort vorhergesagten Ventilstellwert eines ersten Heizungsventils der SOLL-Wertes der Temperatur nicht erreicht wird oder werden kann, eine weitere Vorhersage und/oder Klassifikation für einen Ventilstellwert eines zweiten Heizungsventils, dass an einem zweiten Verbauungsort vorgesehen ist als Ausgabe von einem trainierten KNN abgerufen und dieser als Anpassungswert ausgegeben. Somit kann eine Abstimmung bzw. ein Abgleich zwischen den verschiedenen Heizungsventilen situationsabhängig und unabhängig von hinterlegten Temperaturprofilen vorgenommen werden. Auch können diese Temperaturprofile basieren auf den errechneten Werten angepasst und damit optimiert werden.

Insgesamt bedeutet das, dass die in den Lern-Datensätzen gesammelte Erfahrung bezüglich der Ventilstellwert eines jeweiligen Heizungsventils genutzt werden kann, um zutreffende Prognosen für die künftige Einstellung des Ventilstellwertes abzugeben. Ist die Menge der Lern-Datensätze hinreichend groß und divers, kann das KNN die hierin enthaltenen Erkenntnisse dahingehend verallgemeinern, dass es anschließend auch für völlig unbekannte Kombinationen aus SOLL-Werten und Umgebungsbedingungen die konkrete Einstellung der Ventil-Stellwerte in einem Heizungssystem hinreichend genau vorhersagt. Gerade die Fähigkeit von KNN zur Verallgemeinerung ist im Zusammenhang mit dem Betrieb von Heizungssystemen wichtig. Wird ein gleichartiges Gebäude mit der gleichen Konfiguration und Anordnung von Wärmequellen an einem anderen Ort errichtet, ist es sehr wahrscheinlich, dass der automatische, adaptive hydraulische Abgleich schneller und genauer durchgeführt werden kann.

Die Erfindung bezieht sich auch auf ein oder mehrere Computerprogramme, enthaltend maschinenlesbare Anweisungen, die, wenn sie auf einem oder mehreren Computern und/oder auf einer oder mehreren Steuereinheiten und/oder einem oder mehreren Servern ausgeführt werden, den einen oder die mehreren Computer und/oder die eine oder die mehreren Steuereinheiten und/oder den einen oder die mehreren Server, dazu veranlassen, ein Verfahren wie zuvor beschrieben auszuführen. Das oder die Computerprogramme können beispielsweise auf einem maschinenlesbaren Datenträger oder einem über ein Netzwerk erwerbbaren und ladbaren Downloadprodukt verkörpert sein.

Nachfolgend wird der Gegenstand der Erfindung anhand von Figuren erläutert, ohne dass der Gegenstand der Erfindung hierdurch beschränkt wird.

Es zeigt:
- **Fig. 1:**: Ausführungsbeispiel eines in einem Gebäude angeordneten Heizungssystems,
- **Fig. 2:**: Ausführungsbeispiel eines Heizungsventils,
- **Fig. 3:**: ein Beispiel für die Abstimmung mehrere Heizungsventile zur Erreichung einer SOLL-Temperatur und
- **Fig. 4:**: einen Sonderanwendungsfall eines Heizungssystems.

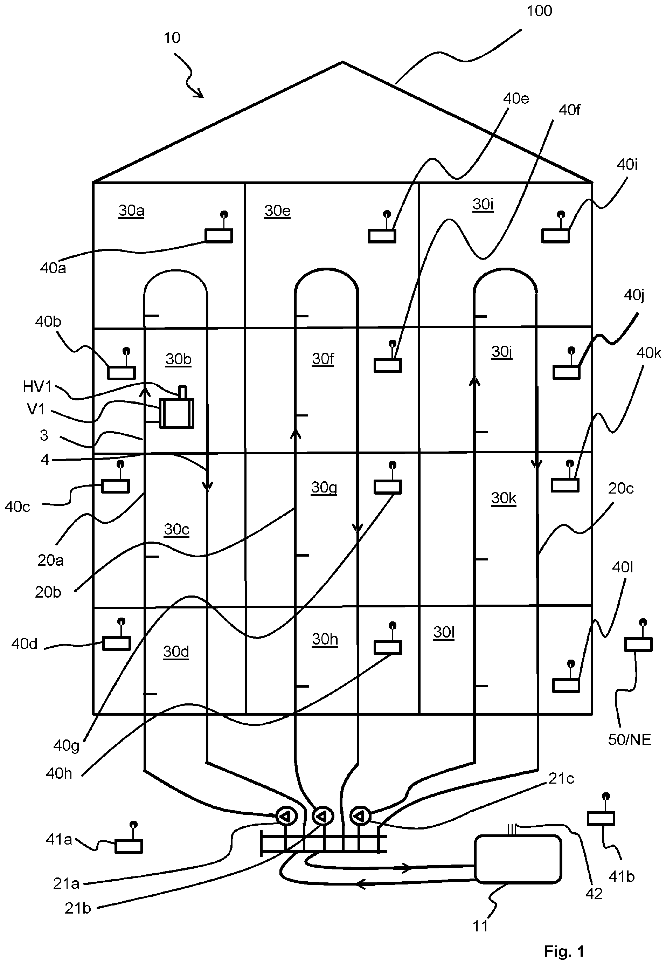

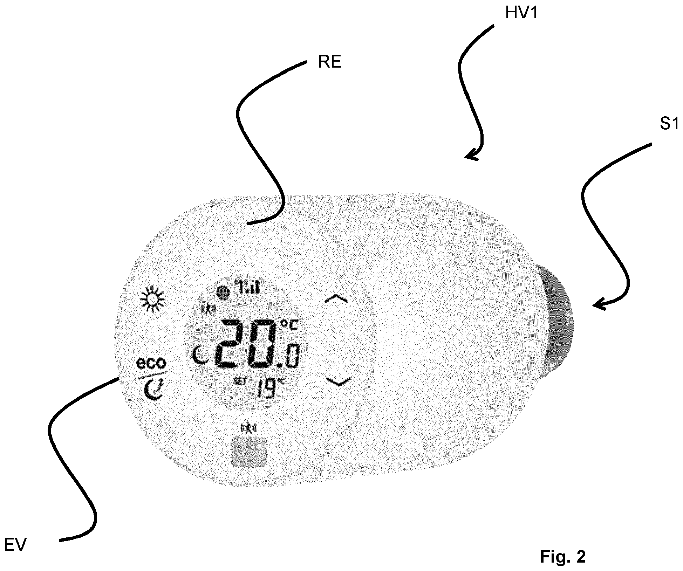

Fig. 1 zeigt ein Gebäude 100, das insgesamt drei separate Heizstränge 20a, b, c aufweist. Im Gebäude 100 ist ein Wärmeerzeuger 11 vorgesehen, der die für die einzelnen Verbraucher V1 benötigte Wärme zur Verfügung stellt. Den Heizsträngen 20a, b, c sind jeweils Pumpen 21a, b, c zugeordnet. Jeder der Heizstränge 20a, b, c versorgt eine Anzahl von Wohnungen 30a-l mit Wärme. In den Wohnungen 30 a-l sind die Verbraucher V1, exemplarisch nur in einer der Wohnungen 30b dargestellt als Heizkörper, angeordnet. Jedem dieser Verbraucher V1 ist eine Steuereinheit 40a-l zugeordnet. Diese ist mit einem Heizungsventil HV1 gekoppelt. Im Heizungsventil HV1 ist zudem eine Erfassungsvorrichtung EV (vgl. Fig. 2) für die IST-Temperatur im jeweiligen Raum vorgesehen.

Die Erfassungsvorrichtung EV erfasst den aktuellen IST-Wert der Raumtemperatur und gibt diesen an die Steuereinheit 40a-l weiter. In der Steuereinheit 40a-l sind SOLL-Werte für die Raumtemperatur abgelegt. Die Steuereinheit 40a-l gleicht den gemessenen IST-Wert mit dem abgelegten SOLL-Wert ab und leitet daraus einen Ventilstellungswert ab. Dieser Ventilstellungwert wird anschließend an das Heizungsventil HV1 ausgegeben, das darauf hin mittels einer im Heizungsventil HV1 vorgesehenen Steuer- und Rückkopplungselektronik RE (vgl. Fig. 2) eine Verstellung eines ebenfalls im Heizungsventil HV1 vorgesehenen Stellantriebes S1 (vgl. Fig. 2) bewirkt. Hierdurch wird der Volumenstrom des Heizmediums, dass über die Vorlaufleitung 3 zugeführt wird entweder gedrosselt oder erhöht, so dass es letztlich zu einer Einstellung des gewünschten SOLL-Wertes für die Temperatur kommt. Die Steuereinheit 40a-l berechnet dabei den Ventilstellungswert als Ableitung aus der Abweichung zwischen SOLL- und IST-Wert.

Die Betätigung des Stellantriebes S1 des Heizungsventils HV1 zur Einstellung des Ventilstellungswertes am Heizungsventil HV1 erfolgt über die Steuer- und Rückkopplungselektronik RE. Nach Erreichen des errechneten Ventilstellungswertes wird dieser an die Steuereinheit 40a-l zurückgegeben und dort gespeichert. Die zuvor beschriebenen Schritte werden so lange wiederholt, bis der SOLL-Wert für die Raumtemperatur erreicht wird. Durch kontinuierlichen Abgleich innerhalb einstellbarer Zeitintervalle wird somit sichergestellt, dass der SOLL-Wert im jeweiligen Raum gehalten wird.

Wie aus Fig. 1 ersichtlich sind in jedem Heizstrang 20a, b, c mehrere Steuereinheiten 40a-l angeordnet, die jeweils auf die entsprechenden Verbraucher V1 wirken bzw. mit diesen gekoppelt sind. Im Heizungssystem 10 erfolgt dabei eine Abstimmung bzw. ein Abgleich der unterschiedlichen Steuereinheiten 40a-l und damit ein Abgleich über sämtliche Verbraucher V1 in den Heizsträngen 20a, b, c. Die Verbraucher V1 der einzelnen Heizstränge 20a, b, c können damit temperaturabhängig gesteuert werden, sodass die zur Verfügung gestellte Wärmemenge optimal auf die Verbraucher V1 verteilt werden kann. In sämtlichen Räumen wird somit ein gleichmäßiges Temperaturprofil erzielt. Die Steuereinheiten 40a-l können bedarfsweise auch auf Steuereinheiten 41a, b der Pumpen 21a, b, c bzw. des Wärmeerzeugers 11 zugreifen und die Pumpleistung bzw. die zur Verfügung gestellte Wärmemenge bedarfsorientiert anpassen bzw. drosseln. Sämtliche Verbraucher V1 eines Heizstrang 20a, b, c sind über die Vorlauf- 3 bzw. Rücklaufleitung 4 miteinander verbunden. Die Steuereinheiten 40a-l können auch mit einem zentralen Server 50 verbunden werden, der den systemweiten Abgleich und die entsprechende Steuerung der Heizungsventile HV1 übernimmt. Die somit zur Verfügung gestellte Netzsteuereinheit NE verarbeitet dabei die durch die jeweiligen Steuereinheiten 40a-l der Heizstränge 20a, b, c erfassten Werte und berechnet die auszugebenden Ventilstellungswerte, die dann über die Steuereinheiten 40a-l in den jeweiligen Gebäudeeinheiten bzw. Wohnungen 30a-l umgesetzt werden. Durch die Bündelung der Informationen aus den Steuereinheiten 40a-l der einzelnen Gebäudeeinheiten kann auf einfache Art und Weise über die Netzsteuereinheit NE ein Gesamtabgleich über das Gebäude durchgeführt und die Leistung bzw. der Lastanfall an den einzelnen Verbrauchern V1 derart optimiert und abgeglichen werden, dass im gesamten Heizungssystem 10 ein automatischer, adaptiver hydraulischer Abgleich vorgenommen werden kann. Dieser kann dynamisch und ohne mechanischen Abgleich an einzelnen Heizungsventilen HV1 vorgenommen werden. Über die Steuereinheiten der Pumpen 21a, b, c bzw. des Kessels 11 kann die Leistung dieser Elemente in den Abgleich einbezogen bzw. die Leistung angepasst werden. Alternativ kann an den Pumpen 21a, b, c und/oder dem Kessel 11 eine Schnittstelle 42 zur Einbindung in das Heizungssystem 10 über die Steuereinheiten 40a-l oder die Netzsteuereinheit NE vorgesehen werden.

Als weitere Einflussgrößen bei der Durchführung des adaptiven hydraulischen Abgleichs können beispielsweise der Verbauungsort der jeweiligen Heizungsventil HV1 bzw. der Verbraucher V1 im Heizungssystem 10, die Position des Heizungssystems 10 in einem Heizstrang 20a, b, c oder einer übergeordneten Heizungsanlage und/oder ein Maß für die Umgebungstemperatur zum Zeitpunkt der Festlegung des Öffnungswert des Heizungsventils HV1 in die Berechnung einfließen. Daneben können auch Informationen dahingehend, wie das Heizungssystem 10 aufgebaut ist berücksichtigt werden. Ebenfalls möglich ist eine Berücksichtigung der Information dahingehend, wie sich der Lastanfall im Heizungssystem 10 verhält und/oder zumindest auszugsweise Planungsdaten für die Heizstränge 20a, b, c oder das zu beheizende Gebäude 100 oder den zu beheizenden Raum und/oder eine Information über die im Heizungssystem 10 vorhandene und miteinander gekoppelten Heizungsventile HV1. Auch in die Berechnung des Ventilstellungswertes, der notwendig ist, um eine SOLL-Temperatur TS zu erreichen, kann einfließen, zu welchem Anteil eine Gesamtwärmemenge oder ein Druckanfall im Heizungssystem 10 am jeweiligen Heizungsventil HV1 zur Verfügung steht oder zur Verfügung gestellt werden kann und/oder eine Information dahingehend, welche Maximalleistung der dem Heizungssystem 10 zugeordnete Brenner 11 oder die dem Heizungssystem zugeordneten Wärmepumpen 21a, b, c zur Verfügung stellen können.

Fig. 2 zeigt eine Ausführung eines Heizungsventil HV1. Dieses weit im Ausführungsbeispiel neben dem Stellantrieb S1 für die Einstellung eines Ventilstellungswertes zur Steuerung eines Volumenstroms eines Heizmediums zum oder vom ersten Verbraucher V1 eine Erfassungsvorrichtung EV für den IST-Wert der Raumtemperatur auf. Zusätzlich ist im Heizungsventil HV1 eine Steuer- und Rückkopplungselektronik RE angeordnet, die mit der Steuereinheit 40a-k verbunden ist und von dieser Steuersignale für die Verstellung des Stellantriebes S1 erhält. Dieser Stellantrieb S1 wirkt auf einen Betätigungsstift des Heizungsventil HV1, über den die Öffnungs- und Schließweite des Heizungsventils HV1 eingestellt und damit der Volumenstrom des Heizmediums gesteuert wird. Die Steuer- und Rückkopplungselektronik RE ist in der Lage, den aktuell eingestellten Ventilstellungswert an die Steuereinheit 40a-k zurückzugeben, wo dieser dann für einen weitergehenden Abgleich herangezogen wird. Der Stellantrieb S1 ist im Ausführungsbeispiel gemäß Fig. 2 als Schrittmotor ausgebildet der eine Schrittauflösung von zwischen O und 1000 Schritten, insbesondere von zwischen O und 600 oder O und 300 Schritten aufweist. Über die jeweilige Betätigung des Stellantriebes S1 kann die am Verbraucher V1 zur Verfügung gestellte Menge des Heizmediums eingestellt werden. Aufgrund der kontinuierlichen Rückkopplung zwischen Heizungsventil HV1 und Steuereinheit 40a-k kann permanent ein hydraulischer Abgleich im jeweiligen Verbraucher V1 und durch eine übergeordnete Erfassung und Verarbeitung der jeweiligen Ventilstellungswerte ein adaptiver hydraulischer Abgleich in einem gesamten Heizungssystem vorgenommen werden, so dass stets eine optimale Steuerung und Betätigung der Stellantriebe S1 erfolgt. Dies führt letztlich zur Erreichung der SOLL-Temperatur TS bzw. -Temperaturen im gesamten Heizungssystem 10. Hierbei ist es auch möglich, unterschiedliche Temperaturen bzw. Temperaturprofile in verschiedenen Räumen zu steuern und die zur Verfügung stehende Menge an Heizmedium so zu verteilen, dass die SOLL-Temperaturen TS in den Räumen zügig erreicht und über den jeweils vorgesehenen Zeitraum gehalten werden.

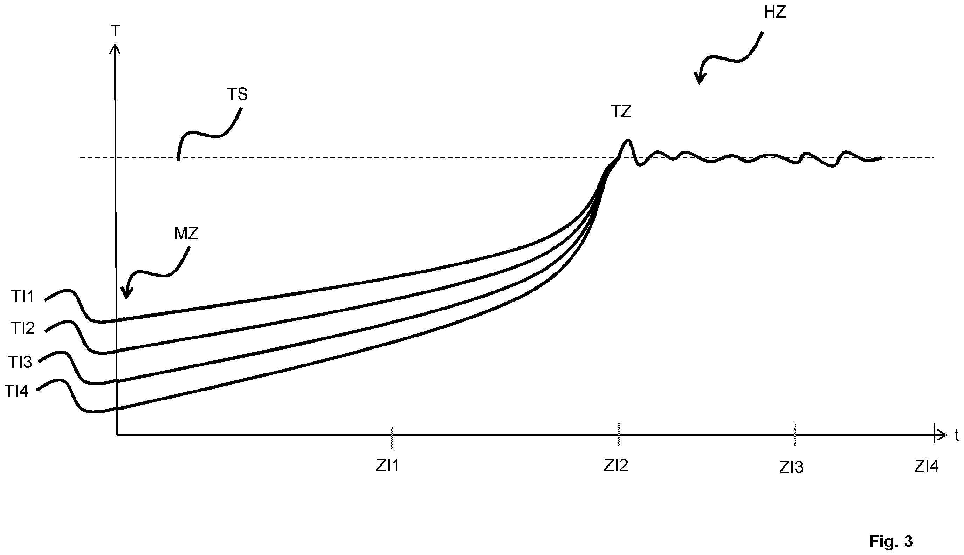

Fig. 3 zeigt ein Beispiel für die Abstimmung mehrerer Heizungsventile HV1 zur Erreichung einer SOLL-Temperatur TS. Die geforderte SOLL-Temperatur TS liegt im Ausführungsbeispiel bei 22°C. Die in den einzelnen Räumen vorgesehenen Erfassungsvorrichtungen EV haben zum ersten Messzeitpunkt MZ jeweils unterschiedliche IST-Temperaturen TI 1, TI 2, TI 3, TI 4 in den Räumen ermittelt. Die Steuereinheit 40a-k gleicht nunmehr die Ventilstellungswerte der Heizungsventil HV 1 in den einzelnen Räumen derart ab, dass bis zu einem Zielzeitpunkt TZ die SOLL-Temperatur TS in allen Räumen gleichzeitig erreicht wird. Hierbei wird beispielsweise im Raum mit der IST-Temperatur TI 4 zum ersten Messzeitpunkt MZ, der im Ausführungsbeispiel die niedrigste Temperatur aufweist, eine größere Ventilöffnung eingestellt als im Raum mit der IST-Temperatur TI 1 zum ersten Messzeitpunkt MZ, der sich bereits nahe der SOLL-Temperatur TS befindet. Durch kontinuierliche Rückkopplung und Abgleich zwischen den einzelnen Räumen und den dortigen Verbrauchern V1 jeweils zugeordneten Einstellungswerten für die Heizungsventil HV1 kann eine automatische Steuerung dahingehend erfolgen, dass die zur Verfügung gestellte Wärmemenge derart auf die Räume verteilt wird, dass diese zu einem Zielzeitpunkt TZ die gleiche SOLL-Temperatur TS aufweisen. Berücksichtigt wird hierbei auch die Ausrichtung der Räume, deren Nutzung und Größe sowie die Dimensionierung der Heizkörper in den jeweiligen Räumen. Diese Parameter sind in Summe entscheidend für die Erreichung der SOLL-Temperatur TS bzw. der für die Erreichung benötigten Zeit. Die Ventilstellungswerte der Heizungsventil HV in den einzelnen Räumen werden in der Steuereinheit 40a-k gespeichert und kontinuierlich mit den erfassten Raumtemperaturen abgeglichen. Erforderlichenfalls kann es zu einer Anpassung der Ventilstellungswerte und damit zu einer Anpassung und Steuerung des Volumenstroms im Heizungsventil HV1 zu den jeweiligen Verbrauchern V1 kommen. Das erfindungsgemäße Heizungssystem 10 erlaubt es dabei auch die in den Räumen einmal erreichte Temperatur über einen Erhaltungszeitraum HZ zu erhalten, indem kontinuierlich die Temperatur erfasst und gegebenenfalls die Ventilstellungswerte nachjustiert werden. Die Erfassungsvorrichtung EV erfasst die IST-Temperatur des Raumes kontinuierlich bzw. in definierten Zeitintervallen ZI 1 - ZI 4 von beispielsweise 1, 5 und 10 Minuten, bevorzugt von zwischen 1 und 10 bzw. 15 Minuten oder in durch den Nutzer einstellbaren Zeitintervallen.

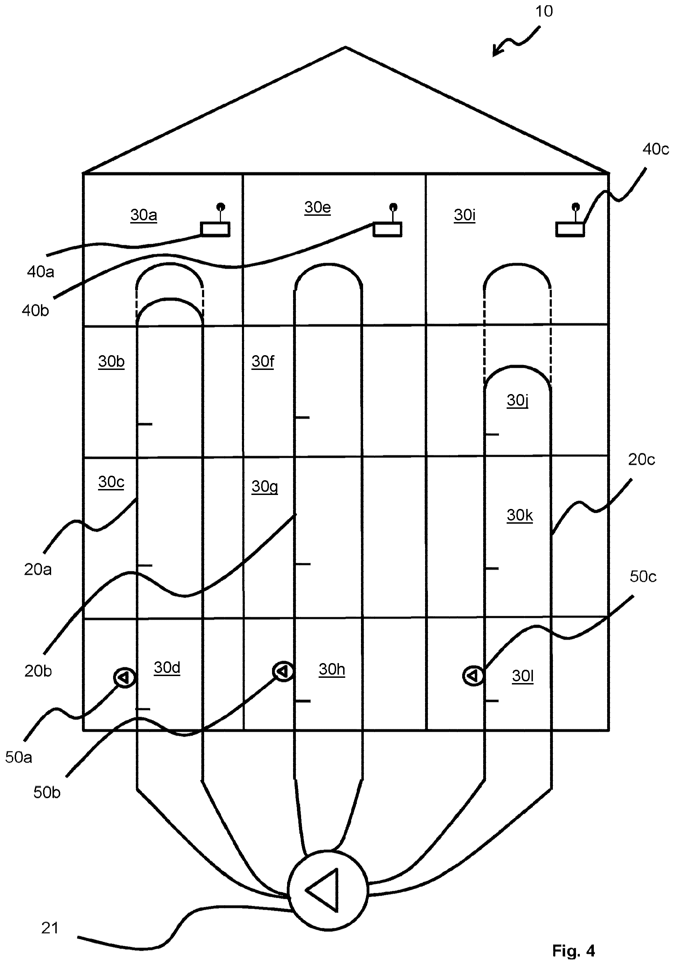

Einen Sonderanwendungsfall eines Heizungssystems 10 in einem Gebäude mit mehreren Wohnungen 30a-l der nicht Teil der Erfindung ist, stellt Fig. 4 dar. Während in herkömmlichen Systemen mit mehreren Heizsträngen 20a, b, c jedem Heizstrang 20a, b, c eine eigene Umwälzpumpe 21 zugeordnet ist, zeigt Fig. 4 den Sonderfall, bei dem drei Heizstränge 20a, b, c unterschiedlicher Länge vorgesehen sind, die eine gemeinsame Pumpe 21 aufweisen. In diesem Beispiel sind in den Heizsträngen 20a, b, c digitale Strangregulierungsventile 50a, b, c vorgesehen, die ebenfalls mit Steuereinheiten 40a, b, c kommunizieren und von diesen Steuersignale erhalten.

Das Heizungssystem 10 bzw. die diesem zugeordnete Steuereinheit 40a, b, c simuliert zunächst ein Heizungssystem 10 mit gleich langen Strängen (als gestrichelte Linien dargestellt) und führt automatisch eine Anpassung über die Steuerung der digitalen Strangregulierungsventile 50a, b, c durch. Hierdurch wird im gesamten System eine gleichmäßige Druckverteilung und ein entsprechender Lastanfall an den Verbrauchern (nicht dargestellt) in den einzelnen Wohnungen 30a-l erreicht. Im nächsten Schritt erfolgt dann die Einstellung der Raumtemperatur im wie zuvor beschriebenen Verfahren bzw. Heizungssystem 10. dabei erfolgt eine Abstimmung zwischen den Steuereinheiten 40a, b, c, der jeweiligen Verbraucher (nicht dargestellt) und den Strangregulierungsventilen 50 a, b, c und der Pumpe 21, und im ganzen Heizungssystem 10 gleichmäßige Bedingungen herzustellen. Die Steuerung bzw. der Abgleich zwischen den einzelnen Einheiten bzw. Wohnungen 30a-l erfolgt dann in zu- vor beschriebener Art und Weise.

## Patentansprüche

1. Heizungssystem (10) mit einem automatischen adaptiven hydraulischen Abgleich umfassend:
• wenigstens eine zentrale Heizquelle, beispielsweise Brenner (11)
• wenigstens einen ersten Verbraucher (V1) mit jeweils einem lokalen Vorlaufzweig (3) und einen lokalen Rücklaufzweig (4),
• wenigstens eine zentrale Umwälz- oder Wärmepumpe (21a, b, c) zur Förderung eines Heizungsmediums von der Heizquelle (11) über eine zentrale Vorlaufleitung (3) zu dem ersten Verbraucher, wobei das Heizungsmedium über eine zentrale Rücklaufleitung (4) von dem ersten Verbraucher (V1) zurück zur Heizquelle fließen kann,
• jeweils ein dem ersten Verbraucher (V1) zugeordnetes und in dem jeweiligen Vorlaufzweig (3) angeordnetes ersten Heizungsventil (HV1), insbesondere Thermostatventil,
• einen dem ersten Heizungsventil (HV1) zugeordneten, mit einer ersten Steuer- und Rückkopplungselektronik (RE) ausgestatteten erster Stellantrieb (S1) für die Einstellung eines Ventilstellungswertes zur Steuerung eines Volumenstroms des Heizmediums im ersten Verbraucher (V1), wobei der Stellantrieb (S1) bevorzugt auf einen Betätigungsstift des Heizungsventils (HV1) wirkt,
• eine Erfassungsvorrichtung (EV) für einen IST-WERT der Raumtemperatur (TI1-4),
• eine mit der Erfassungsvorrichtung (EV) und dem ersten Stellantrieb (S1) gekoppelte Steuereinheit (40a-l),
wobei in der Steuereinheit (40a-l) ein SOLL-Wert für die Raumtemperatur (TS) ablegbar ist und über die Steuereinheit (40a-l) ein Steuersignal für den Ventilstellungswert an die Steuer- und Rückkopplungselektronik (RE) ausgebbar und durch inkrementelle Betätigung des Stellantriebes (S1) der SOLL-Wert für die Raumtemperatur (TS) einstellbar ist und über die Steuer- und Rückkopplungselektronik (RE) bei Erreichen des SOLL-Wertes für die Raumtemperatur (TS) der jeweils eingestellte Ventilstellungswert an die Steuereinheit (40a-l) rückgebbar ist und der adaptive hydraulische Abgleich durch zeitgesteuerte, insbesondere kontinuierliche Anpassung des Ventilstellungswertes durchführbar ist **dadurch gekennzeichnet, dass** eine Integration des Heizungssystems in ein mehrere Abschnitte aufweisendes Verteilnetz vorgesehen ist, wobei die Abschnitte unabhängige Heizstränge (20a, b, c) mit jeweils wenigstens einem Verbraucher (V1) aufweisen, die Heizstränge jeweils eine Anzahl von Wohnungen (30a-l) versorgen und das Verteilnetz wenigstens eine Netzsteuereinheit (NE) für einen dynamischen hydraulischen Abgleich im gesamten Verteilnetz aufweist, wobei die Netzsteuereinheit (NE) das Heizungssystem unmittelbar über die Steuereinheiten (40a-l) oder über die zentralen Steuereinheiten steuert.

2. Heizungssystem (10) nach Anspruch 1, **dadurch gekennzeichnet, dass** wenigstens ein zweiter Verbraucher vorgesehen ist und die Steuereinheit (40a-l) zur Einstellung des SOLL-Wertes für die Raumtemperatur (TS) Steuersignale für eine Einstellung des jeweiligen Ventilstellungswertes an die Steuer- und Rückkopplungselektronik (RE) der jeweiligen Verbraucher (V1) ausgibt und in der Steuereinheit (40a-l) nach Abgleich der Ventilstellungswerte von erstem und zweitem Verbraucher (V1) eine Ausgabe individueller Ventilstellungswerte an die Steuer- und Rückkopplungselektronik (RE) von erstem und zweitem Verbraucher (V1) zur Einstellung der Raumtemperatur vorgesehen ist und die Verbraucher (V1) insbesondere in getrennten Räumen angeordnet sind und eine Kopplung direkt mit einer zentralen Steuereinheit oder über eine jeweils den Verbrauchern zugeordnete Steuereinheit (40a-l) vorgesehen ist und wobei in der Netzsteuereinheit (NE), den zentralen Steuereinheiten oder den Steuereinheiten (40a-l) bevorzugt ein thermische Zeitverhalten über abrufbare SOLL-Wert-Profile für die Raumtemperatur ablegbar ist und der adaptive hydraulische Abgleich in Abhängigkeit von den SOLL-Wert-Profilen für die Raumtemperatur durchführbar ist und eine Anpassung des thermischen Zeitverhaltens in Abhängigkeit von der Tageszeit, der Raumnutzung, der Außentemperatur, den jahreszeitlich bedingten Temperaturverläufen, Raumausrichtung und/oder -ausgestaltung vorgesehen ist.

3. Heizungssystem (10) nach einem der vorhergehenden Ansprüche, **dadurch gekennzeichnet, dass** der Stellantrieb (S1) als Schrittmotor ausgebildet ist, der eine Schrittauflösung von zwischen 0 und 1000 Schritten, insbesondere von zwischen 0 und 800 Schritten, bevorzugt von zwischen 0 und 600 Schritten, besonders bevorzugt von zwischen 0 und 300 Schritten aufweist, wobei das Heizungsventil (HV1) insbesondere als Schrittmotorventil ausgebildet ist und der Stellantrieb (S1) als Teil des Schrittmotorventils vorgesehen ist.

4. Heizungssystem (10) nach einem der vorhergehenden Ansprüche, **dadurch gekennzeichnet, dass** zusätzlich zu den SOLL-Wert-Profilen für die Raumtemperatur eine SOLL-Temperaturrampe vorgesehen ist und eine Betätigungsgeschwindigkeit des Stellantriebes (S1) in Abhängigkeit von der SOLL-Temperaturrampe vorgesehen ist und/oder die Erfassungseinrichtung (EV) bevorzugt als unabhängige oder als in dem Heizungsventil (HV1) oder in einem Raumthermostat integrierte Temperaturmessvorrichtung ausgebildet ist.

5. Heizungssystem (10) nach einem der vorhergehenden Ansprüche, **dadurch gekennzeichnet, dass** die jeweilige Netzsteuereinheit (NE), die Steuereinheit (40a-l) und/oder die zentralen Steuereinheit dezentral angeordnet und in ein Datennetzwerk eingebunden sind oder die jeweilige Netzsteuereinheit (NE), die Steuereinheit (40a-l) und/oder die zentrale Steuereinheit als auf einem Server (50) oder virtuellen Server betreibbar ausgebildet ist und über die jeweilige Netzsteuereinheit (NE), die Steuereinheit (40a-l) oder die zentrale Steuereinheit bedarfsweise ein Steuersignal für die Heizquelle und/oder die Umwälz- oder Wärmepumpe (21a, b, c) zur Erhöhung oder Absenkung einer jeweiligen Heiz- oder Pumpleistung ausgebbar ist.

6. Verfahren zur Durchführung eines automatischen, adaptiven hydraulischen Abgleichs in einem Heizungssystem (10) nach einem der Ansprüche 1 bis 5, umfassend die Schritte:
a. Erfassen eines aktuellen IST-Wertes der Raumtemperatur (TI 1-4) und Weitergabe des IST-Wertes der Raumtemperatur (TI 1-4) an eine Steuereinheit (40a-l),
b. Abgleich des IST-Wertes der Raumtemperatur (TI 1-4) mit einem in der Steuereinheit (40a-l) abgelegten SOLL-Wert für die Raumtemperatur (TS),
c. Ableitung eines Ventilstellungswert aus der Abweichung zwischen SOLL-Wert für die Raumtemperatur (TS) und IST-Wert der Raumtemperatur (TI 1-4),
d. Ausgabe eines Steuersignals an eine einem Heizungsventil (HV1) zugeordnete Steuer- und Rückkopplungselektronik (RE),
e. Betätigung eines Stellantriebes (S1) des Heizungsventils (HV1) durch die Steuer- und Rückkopplungselektronik (RE) zur Einstellung des Ventilstellungswertes am Heizungsventil (HV1),
f. Rückgabe des Ventilstellungswertes an die Steuereinheit (40a-l),
g. Wiederholung der Schritte a.) bis f.) bis zur Erreichung des SOLL-Wertes für die Raumtemperatur (TS),
wobei insbesondere der SOLL-Wert für die Raumtemperatur (TS) ein thermisches Zeitverhalten, insbesondere in Abhängigkeit von der Tageszeit, der Raumnutzung, der Außentemperatur, den jahreszeitlich bedingten Temperaturverläufen, Raumausrichtung und/oder -ausgestaltung abbildet und/oder der Abgleich kontinuierlich oder in definierten Zeitintervallen (ZI1-4) erfolgt und/oder bevorzugt mehrere miteinander in Verbindung stehende Heizungsventile (HV1) vorgesehen sind und die Steuereinheit (40a-l) die Stellantriebe (S1) der jeweiligen Heizungsventile (HV1) derart steuert, dass der SOLL-Wert für die Raumtemperatur (TS) durch individuelle Einstellung der Ventilstellungswerte der jeweiligen Heizungsventile (HV1) erreicht wird, wobei ein unabhängiges Öffnen und/oder Schließen der jeweiligen Heizungsventile (HV1) durchgeführt wird und/oder die Steuerung beim Ausgleich unterschiedliche an den Heizungsventilen (HV1) auftretende Lastanfälle berücksichtigt **dadurch gekennzeichnet, dass** ein adaptiver hydraulischer Abgleich in einem mit einem mehrere Abschnitte aufweisenden Verteilnetz ausgestatteten Gebäudeheizungssystem durchgeführt wird wobei die Abschnitte unabhängige Heizstränge (20a, b, c) mit jeweils wenigstens einem Verbraucher (V1) aufweisen und die Heizstränge jeweils eine Anzahl von Wohnungen (30a-l) versorgen und wobei die Schritte a.) bis f.) jeweils in einzelnen Abschnitten eines Verteilnetzes durchgeführt und der Abgleich für das Gesamtnetz über eine Netzsteuereinheit (NE) erfolgt, wobei das Verteilnetz insbesondere mehrere Steuereinheiten (40a-l) oder übergeordnete Zentralsteuereinheiten aufweist und eine datentechnische Kopplung der Netzsteuereinheit (NE) mit den mehreren Steuereinheiten (40a-l) und/oder Zentralsteuereinheiten vorgesehen ist und wobei das Verteilnetz oder die Abschnitte mehrere insbesondere von einer zentralen Heizquelle versorgte Heizstränge (20a, b, c) aufweisen und die wenigstens eine Netzsteuereinheit (NE) und mehreren Steuereinheiten (40a-l) oder Zentralsteuereinheiten den Abgleich über die Heizstränge (20a, b, c) hinweg durchführt und die Netzsteuereinheit (NE) die Steuersignale wahlweise direkt oder über die Steuereinheiten (40a-l) und/oder Zentralsteuereinheiten an die Steuer- und Rückkopplungselektronik (RE) der Heizungsventile (HV1) ausgibt, wobei die Netzsteuereinheit (NE), die Steuereinheiten (40a-l) oder die Zentralsteuereinheiten, um den SOLL-Werte für die Raumtemperatur (TS) zu erreichen und in Abhängigkeit vom dafür jeweils notwendigen Lastanfall bedarfsweise ein Steuersignal für die Heizquelle und/oder die Umwälz- oder Wärmepumpe(n) (21a, b, c) zur Erhöhung oder Absenkung einer Heiz- und/oder Pumpleistung ausgibt.

7. Verfahren nach Anspruch 6, **dadurch gekennzeichnet, dass** in der Steuereinheit (40a-l) Temperaturrampen für die Erreichung der SOLL-Werte für die Raumtemperatur (TS) hinterlegt sind und eine Steuerung der Stellantriebe (S1) in Abhängigkeit von den Temperaturrampen erfolgt und/oder eine schrittweise Betätigung des Stellantriebes (S1) mit einer Schrittauflösung von zwischen 0 und 1000 Schritten, insbesondere von zwischen 0 und 800 Schritten, bevorzugt von zwischen 0 und 600 Schritten, besonders bevorzugt von zwischen 0 und 300 Schritten erfolgt

8. Verfahren nach einem der Ansprüche 6 oder 7, **dadurch gekennzeichnet, dass** eine Weiterleitung der Steuersignale kabellos, insbesondere über eine W-LAN-Verbindung, Funk, Bluetooth oder ein Telefon- oder Mobilfunknetz erfolgt und/oder die Netzsteuereinheit (NE), die Steuereinheiten (40a-l) und/oder die Zentralsteuereinheiten dezentral vorgesehen oder in ein Datennetzwerk eingebunden sind oder die Netzsteuereinheit (NE), die Steuereinheit (40a-l) und/oder die zentrale Steuereinheit auf einem Server (50) oder virtuellen Server betrieben werden, wobei die gleichzeitige Steuerung mehrerer Heizungssysteme (11) und/oder Verteilernetze über einen Server (50) der ein Netzwerk erfolgt.

9. Rechner-implementiertes Verfahren zum Trainieren eines künstlichen neuronalen Netzwerks (KNN), zur Durchführung eines automatischen, adaptativen hydraulischen Abgleichs nach einem der Ansprüchen 6 bis 8 in einem Heizungssystem (10) nach einem der Ansprüche 1 bis 5, welches mindestens einen Ventilstellungswert für die Erreichung eines SOLL-Wertes einer Raumtemperatur (TS) in einem Heizungssystem (10) vorhersagt, wobei eine Integration des Heizungssystems in ein mehrere Abschnitte aufweisendes Verteilnetz vorgesehen ist und die Abschnitte unabhängige Heizstränge (20a, b, c) mit jeweils wenigstens einem Verbraucher (V1) aufweisen und die Heizstränge jeweils eine Anzahl von Wohnungen (30a-I) versorgen, wobei das Verhalten des KNN durch einen Satz Parameter charakterisiert ist, mit den Schritten:
• es wird eine Menge Lern-Datensätze bereitgestellt, wobei jeder Lern-Datensatz für einen Ventilstellungswert einen Satz Kenngrößen, der die Erreichung eines SOLL-Wertes einer Raumtemperatur (TS) charakterisiert, mindestens ein Maß für die inkrementelle Betätigung des Stellantriebes (S1), welcher zur Erreichung eines Öffnungswertes des Heizungsventil (HV1), umfasst;
• dem KNN werden für jeden Lern-Datensatz jeweils der darin enthaltene Satz Kenngrößen und das darin enthaltene Maß für die inkrementelle Betätigung des Stellantriebes (S1) als Eingaben zugeführt, um eine Vorhersage und/oder Klassifikation für den mindestens einen Öffnungswertes des Heizungsventils (HV1) als Ausgabe zu erhalten;
• die Vorhersage und/oder Klassifikation für den Öffnungswert des Heizungsventil (HV1) wird mit dem im Lern-Datensatz enthaltenen Wert für den Öffnungswert des Heizungsventils (HV1) verglichen;
• es wird eine inkrementelle Betätigung des Stellantriebes (S1) ausgewertet, die von einer in dem Vergleich ermittelten Abweichung abhängt;
• die Parameter, und/oder die Lern-Datensätze, des KNN werden angepasst mit dem Optimierungsziel, den Wert der inkrementelle Betätigung des Stellantriebes (S1) zu verbessern und wobei
der Lern-Datensatz optional zusätzlich
• eine Identifikation des Verbauungsortes des Heizungsventils (HV1) in dem Heizungssystem (10) und/oder
• eine Identifikation der Position des Verbrauchers (V1) in einem Heizstrang (20a, b, c) und/oder
• ein Maß für die Umgebungstemperatur zum Zeitpunkt der Festlegung des Öffnungswert des Heizungsventils (HV1), und/oder
• eine Information dahingehend, wie das Heizungssystem (10) aufgebaut ist, und/oder
• eine Information dahingehend, wie sich der Lastanfall im Heizungssystem (10) verhält und/oder
• zumindest auszugsweise Planungsdaten für die Heizstränge (20a, b, c) oder das zu beheizende Gebäude (100), eine Anzahl von Wohnungen (30a-l) oder den zu beheizenden Raum, und/oder
• eine Information über die im Heizungssystem (10) vorhandene und miteinander gekoppelten Heizventile (HV1), und/oder
• eine Information dahingehend, zu welchem Anteil eine Gesamtwärmemenge oder ein Druckanfall im Heizungssystem (10) am jeweiligen Heizungsventil (HV1) zur Verfügung steht und/oder
• eine Information dahingehend, welche Maximalleistung der dem Heizungssystem (10) zugeordnete Wärmeerzeuger, insbesondere Brenner (11) oder die dem Heizungssystem (10) zugeordnete Umwälz- oder Wärmepumpe (21a, b, c) zur Verfügung stellen kann, als weitere dem KNN zuzuführende Eingaben enthält.

10. Künstliches neuronales Netzwerk, KNN, trainiert mit dem Verfahren nach Anspruch 9.

11. Datensatz von Parametern, der ein KNN charakterisiert, erhalten mit dem Verfahren nach Anspruch 9.

12. Rechner-implementiertes Verfahren zur Vorhersage und/oder Klassifikation des Ventilstellwertes eines jeweiligen Heizungsventils (HV1) in einem Heizungssystem (10) nach einem der Ansprüche 1 bis 5, wobei die Integration des Heizungssystems in ein mehrere Abschnitte aufweisendes Verteilnetz vorgesehen ist und die Abschnitte unabhängige Heizsträngen (20a, b, c) mit jeweils wenigstens einem Verbraucher (V1) aufweisen und die Heizstränge jeweils eine Anzahl von Wohnungen (30 a-I) versorgen mit den Schritten:
• es wird ein Satz Kenngrößen, der den geforderten SOLL-Wert der Raumtemperatur (TS) charakterisiert, ermittelt;
• es wird mindestens ein Maß für den Ventilstellwert jedes Heizungsventils (HV1) in dem Heizungssystem (10) ermittelt;
• die Kenngrößen und das Maß für den Ventilstellwert eines jeweiligen Heizungsventils (HV1) in dem Heizungssystem (10) werden einem trainierten KNN als Eingaben zugeführt;
mindestens eine Vorhersage und/oder Klassifikation für ein Maß des Ventilstellwertes für die Erreichung des SOLL-Wertes der Raumtemperatur (TS) im Heizungssystem (10) oder Heizstrang (20a, b, c) wird als Ausgabe von dem KNN abgerufen, wobei optional dem KNN zusätzlich
• eine Identifikation des Orts, an dem mindestens ein Heizungsventil (HV1) verbaut wurde, und/oder
• ein Maß für die Umgebungstemperatur oder IST-WERT der Raumtemperatur (TI1-4) am Ort der Verbauung des Heizungsventils (HV1) als Eingaben zugeführt werden und/oder wobei bevorzugt in Antwort darauf, dass mit einem für einen ersten Verbauungsort vorhergesagten Ventilstellwert eines ersten Heizungsventils (HV1) der SOLL-Wertes der Raumtemperatur (TS) nicht erreicht wird, eine weitere Vorhersage und/oder Klassifikation für einen Ventilstellwert eines zweiten Heizungsventils (HV1), dass an einem zweiten Verbauungsort vorgesehen ist als Ausgabe von einem trainierten KNN abgerufen wird.

13. Ein oder mehrere Computerprogramme, enthaltend maschinenlesbare Anweisungen, die, wenn sie auf einem oder mehreren Computern und/oder auf einer oder mehreren Steuereinheiten (40 a-l) und/oder einem oder mehreren Servern (50) ausgeführt werden, den einen oder die mehreren Computer und/oder die eine oder die mehreren Steuereinheiten (40a-l) und/oder den einen oder die mehreren Server (50), dazu veranlassen, ein Verfahren nach Anspruch 12 auszuführen.

14. Maschinenlesbarer Datenträger und/oder Downloadprodukt mit dem einen Computerprogramm oder den mehreren Computerprogrammen nach Anspruch 13.

## Claims

1. Heating system (10) with an automatic adaptive hydraulic adjustment:
• at least one central heating source, for example burner (11)
• at least one first consumer (V1), each with a local supply branch (3) and a local return branch (4),
• at least one central circulation or heat pump (21a, b, c) for conveying a heating medium from the heating source (11) via a central supply line (3) to the first consumer, wherein the heating medium can flow back from the first consumer (V1) to the heating source via a central return line (4),
• a first heating valve (HV1), in particular a thermostatic valve, assigned to the first consumer (V1) and arranged in the respective flow branch (3),
• a first actuator (S1) associated with the first heating valve (HV1) and equipped with first control and feedback electronics (RE) for setting a valve position value for controlling a volume flow of the heating medium in the first consumer (V1), wherein the actuator (S1) preferably acts on an actuating pin of the heating valve (HV1),
• a detection device (EV) for an ACTUAL value of the room temperature (TI1-4),
• a control unit (40a-l) coupled to the detection device (EV) and the first actuator (S1),
wherein a setpoint value for the room temperature (TS) can be stored in the control unit (40a-l) and a control signal for the valve position value can be output to the control and feedback electronics (RE) via the control unit (40a-l) and the setpoint value for the room temperature (TS) can be set by incremental actuation of the actuator (S1) and, when the setpoint value for the room temperature (TS) is reached, the respective set valve position value can be transmitted to the control unit (40a-l) via the control and feedback electronics (RE).value for the room temperature (TS) can be set and the respective set valve position value can be fed back to the control unit (40a-l) via the control and feedback electronics (RE) when the set value for the room temperature (TS) is reached and the adaptive hydraulic balancing can be performed by time-controlled, in particular continuous, adjustment of the valve position value by means of the control unit (40a-l), in particular continuous adjustment of the valve position value, **characterised in that** integration of the heating system into a distribution network comprising a plurality of sections is provided, the sections having independent heating lines (20a, b, c) each with at least one consumer (V1), the heating lines each supply a number of flats (30a-l) and the distribution network has at least one network control unit (NE) for dynamic hydraulic balancing in the entire distribution network, wherein the network control unit (NE) controls the heating system directly via the control units (40a-l) or via the central control units.

2. Heating system (10) according to claim 1, **characterised in that in that** at least one second consumer is provided and the control unit (40a-l) for setting the setpoint value for the room temperature (TS) outputs control signals for setting the respective valve position value to the control and feedback electronics (RE) of the respective consumers (V1) and, in the control unit (40a-l), after the valve position values of the first and second consumers (V1) have been equalised, an output of individual valve position values to the control and feedback electronics (RE) of the first and second consumers (V1) is provided for setting the room temperature and the consumers (V1), in particular in the control and feedback electronics (RE) of the first and second consumers (V1), are provided for setting the room temperature, and feedback electronics (RE) of the first and second consumer (V1) is provided for setting the room temperature and the consumers (V1) are arranged in particular in separate rooms and a coupling is provided directly with a central control unit or via a control unit (40a-l) respectively assigned to the consumers and wherein in the network control unit (NE), the central control units or the control units (40a-l), a thermal time behaviour can preferably be stored via retrievable setpoint value profiles for the room temperature and the adaptive hydraulic balancing can be carried out as a function of the setpoint value profiles for the room temperature and an adaptation of the thermal time behaviour is provided dependent of the time of day, the room use, the outside temperature, the seasonal temperature curves, room orientation and/or design.

3. Heating system (10) according to one of the preceding claims, **characterised in that** the actuator (S1) is designed as a stepper motor which has a step resolution of between 0 and 1000 steps, in particular of between 0 and 800 steps, preferably of between 0 and 600 steps, particularly preferably of between 0 and 300 steps, wherein the heating valve (HV1) is designed in particular as a stepper motor valve and the actuator (S1) is provided as part of the stepper motor valve.

4. Heating system (10) according to one of the preceding claims, **characterised in that**, in addition to the setpoint value profiles for the room temperature, a setpoint temperature ramp is provided and an actuating speed of the actuator (S1) is provided as a function of the setpoint temperature ramp and/or the detection device (EV) is preferably designed as an independent temperature measuring device or as a temperature measuring device integrated in the heating valve (HV1) or in a room thermostat.

5. Heating system (10) according to one of the preceding claims, **characterised in that** the respective network control unit (NE), the control unit (40a-l) and/or the central control unit are arranged decentrally and are integrated into a data network or the respective network control unit (NE), the control unit (40a-l) and/or the central control unit are designed to be operable on a server (50) or virtual server and are transmitted via the respective network control unit (NE), the control unit (40a-l) and/or the central control unit, the control unit (40a-l) and/or the central control unit is designed to be operable on a server (50) or virtual server and a control signal for the heating source and/or the circulation or heat pump (21a, b, c) can be output as required via the respective network control unit (NE), the control unit (40a-l) or the central control unit in order to increase or reduce a respective heating or pump output.

6. Method for carrying out an automatic, adaptive hydraulic balancing in a heating system (10) according to one of claims 1 to 5, comprising the steps of:
a. Detection of a current ACTUAL value of the room temperature (TI 1-4) and transmission of the ACTUAL value of the room temperature (TI 1-4) to a control unit (40a-l),
b. Comparison of the ACTUAL value of the room temperature (TI 1-4) with a SET value for the room temperature (TS) stored in the control unit (40a-I),
c. Derivation of a valve position value from the deviation between the SET value for the room temperature (TS) and the ACTUAL value for the room temperature (TI 1-4),
d. Output of a control signal to a control and feedback electronics (RE) assigned to a heating valve (HV1),
e. Actuation of an actuator (S1) of the heating valve (HV1) by the control and feedback electronics (RE) to set the valve position value on the heating valve (HV1),
f. Return of the valve position value to the control unit (40a-l),
g. Repeating steps a.) to f.) until the target value for the room temperature (TS) is reached,
wherein in particular the setpoint value for the room temperature (TS) represents a thermal time behaviour, in particular as a function of the time of day, the room use, the outside temperature, the seasonal temperature curves, the room orientation and/or design, and/or the adjustment takes place continuously or at defined time intervals (ZI1-4) and/or preferably a plurality of interconnected heating valves (HV1) are provided, and the control unit (HV2) controls the actuators (S1) of the respective heating valves (HV1) in such a way that the setpoint value for the room temperature (TS) is achieved by individual adjustment of the valve position values of the respective heating valves (HV1), wherein an independent opening and/or closing of the respective heating valves (HV1) is carried out and/or the control system takes into account different load incidents occurring at the heating valves (HV1) during balancing, **characterised in that** an adaptive hydraulic balancing is carried out in a building heating system equipped with a distribution network comprising several sections, wherein the sections have independent heating lines (20a, b, c) each with at least one consumer (V1) and the heating lines each supply a number of flats (30a-l) and wherein the steps a.) to f.) are each carried out in individual sections of a distribution network and the balancing for the entire network is carried out via a network control unit (NE), wherein the distribution network in particular has a plurality of control units (40a-l) or higher-level central control units and a data coupling of the network control unit (NE) with the plurality of control units (40a-l) and/or central control units is provided and wherein the distribution network or the sections have a plurality of heating lines (20a, b, c) supplied in particular by a central heating source, and the at least one network control unit (NE) and a plurality of control units (40a-l) or central control units perform the balancing across the heating lines (20a, b, c) and the network control unit (NE) outputs the control signals either directly or via the control units (40a-l) and/or central control units to the control and feedback electronics (RE) of the heating valves (HV1), wherein the network control unit (NE), the control units (40a-l) or the central control units in order to achieve the setpoint values for the room temperature (TS) and, depending on the load required in each case, outputs a control signal for the heating source and/or the circulation or heat pump(s) (21a, b, c) as required in order to increase or reduce a heating and/or pump output.

7. Method according to claim 6, **characterised in that** temperature ramps for achieving the setpoint values for the room temperature (TS) are stored in the control unit (40a-I) and the actuators (S1) are controlled as a function of the temperature ramps and/or the actuator (S1) is actuated in steps with a step resolution of between 0 and 1000 steps, in particular between 0 and 800 steps, preferably between 0 and 600 steps, particularly preferably between 0 and 300 steps

8. Method according to one of claims 6 or 7, **characterised in that** the control signals are forwarded wirelessly, in particular via a W-LAN connection, radio, Bluetooth or a telephone or mobile network and/or the network control unit (NE), the control units (40a-l) and/or the central control units are provided decentrally or are integrated into a data network or the network control unit (NE), the control unit (40a-l) and/or the central control unit are operated on a server (50) or virtual server, whereby the simultaneous control of several heating systems (11) and/or distribution networks takes place via a server (50) of the network.

9. A computer-implemented method for training an artificial neural network (ANN) for executing an adaptive hydraulic adjustment according to any one of claims 6 to 8 in a heating system according to any one of claims 1 to 5, which predicts at least one valve position value for achieving a setpoint value of a room temperature (TS) in a heating system (10), wherein an integration of the heating system into a distribution network comprising a plurality of sections is provided and the sections comprise independent heating lines (20a, b, c) each having at least one consumer (V1) and the heating lines each supplying a number of flats (30a-l), the behaviour of the ANN being **characterised by** a set of parameters, with the steps of
• a set of learning data sets is provided, wherein each learning data set for a valve position value comprises a set of parameters characterising the achievement of a setpoint value of a room temperature (TS), at least one measure for the incremental actuation of the actuator (S1), which is required to achieve an opening value of the heating valve (HV1);
• For each learning data set, the set of parameters contained therein and the measure for the incremental actuation of the actuator (S1) contained therein are fed to the ANN as inputs in order to obtain a prediction and/or classification for the at least one opening value of the heating valve (HV1) as an output;
• the prediction and/or classification for the opening value of the heating valve (HV1) is compared with the value for the opening value of the heating valve (HV1) contained in the learning data set;
• An incremental actuation of the actuator (S1) is evaluated, which depends on a deviation determined in the comparison;
• the parameters and/or the learning data sets of the ANN are adapted with the optimisation objective of improving the value of the incremental actuation of the actuator (S1) and whereby
the learning data set optionally additionally contains
• an identification of the installation location of the heating valve (HV1) in the heating system (10) and/or
• an identification of the position of the consumer (V1) in a heating line (20a, b, c) and/or
• a measure of the ambient temperature at the time the opening value of the heating valve (HV1) is set, and/or
• an information on how the heating system (10) is constructed, and/or
• an information on the load behaviour in the heating system (10) and/or
• at least excerpts of planning data for the heating lines (20a, b, c) or the building (100) to be heated, a number of flats (30a-l) or the room to be heated, and/or
• an information about the heating valves (HV1) present in the heating system (10) and coupled to one another, and/or
• an information on the proportion of a total heat quantity or a pressure in the heating system (10) that is available at the respective heating valve (HV1) and/or
• an information on the maximum output that can be provided by the heat generator assigned to the heating system (10), in particular the burner (11) or the circulation or heat pump (21a, b, c) assigned to the heating system (10), as further inputs to be supplied to the CN.

10. Artificial neural network, ANN, trained with the method according to claim 9.

11. Data set of parameters characterising a ANN obtained by the method according to claim 9.

12. Computer-implemented method for predicting and/or classifying the valve setting value of a respective heating valve (HV1) in a heating system (10) according to any one of claims 1 to 5, wherein the integration of the heating system into a distribution network having a plurality of sections is provided with the sections having independent heating lines (20a, b, c) each having at least one consumer (V1), with the heating lines (20a, b, c) each supplying a number of flats (30a-l), with the steps:
• A set of parameters characterising the required SET value of the room temperature (TS) is determined;
• at least one measurement for the valve control value of each heating valve (HV1) in the heating system (10) is determined;
• the parameters and the measure for the valve actuating value of a respective heating valve (HV1) in the heating system (10) are fed to a trained ANN as inputs;
at least one prediction and/or classification for a measure of the valve setting value for reaching the setpoint value of the room temperature (TS) in the heating system (10) or heating line (20a, b, c) is retrieved as an output from the ANN, wherein optionally the ANN is additionally provided with the following information:
• an identification of the location where at least one heating valve (HV1) was installed, and/or
• a measure for the ambient temperature or ACTUAL value of the room temperature (TI1-4) at the location of installation of the heating valve (HV1) is supplied as input and/or preferably in response to the fact that the SET value of the room temperature (TS) is not reached with a valve setting value of a first heating valve (HV1) predicted for a first installation location, a further prediction and/or classification for a valve position value of a second heating valve (HV1), which is provided at a second installation location, is retrieved as an output from a trained ANN.

13. One or more computer programs comprising machine-readable instructions which, when executed on one or more computers and/or on one or more control units (40a-l) and/or on one or more servers (50), cause the one or more computers and/or the one or more control units (40a-l) and/or the one or more servers (50) to execute a method according to claim 12.

14. Machine-readable data carrier and/or download product comprising the one or more computer programs according to claim 13.

## Revendications

1. Système de chauffage (10) a équilibrage hydraulique adaptatif automatique :
• au moins une source de chauffage central, par exemple un brûleur (11)
• au moins un premier consommateur (V1), chacun disposant d'une branche locale d'approvisionnement (3) et d'une branche locale de retour (4),
• au moins une pompe à chaleur ou à circulation centrale (21a, b, c) pour transporter un fluide chauffant de la source de chaleur (11) au premier consommateur via une conduite d'alimentation centrale (3), le fluide chauffant pouvant retourner du premier consommateur (V1) à la source de chaleur via une conduite de retour centrale (4),
• une première vanne de chauffage (HV1), en particulier une vanne thermostatique, affectée au premier consommateur (V1) et disposée dans la branche d'écoulement respective (3),
• un premier actionneur (S1) associé à la première vanne de chauffage (HV1) et équipé d'une première électronique de commande et de rétroaction (RE) pour régler une valeur de position de la vanne afin de contrôler un débit volumétrique du fluide chauffant dans le premier consommateur (V1), l'actionneur (S1) agissant de préférence sur un axe d'actionnement de la vanne de chauffage (HV1),
• un dispositif de détection (EV) de la valeur réelle de la température ambiante (TI1-4),
• une unité de commande (40a-l) couplée au dispositif de détection (EV) et au premier actionneur (S1),
dans lequel une valeur de consigne pour la température ambiante (TS) peut être stockée dans l'unité de commande (40a-l) et un signal de commande pour la valeur de position de la vanne peut être émis vers l'électronique de commande et de retour (RE) via l'unité de commande (40a-l) et la valeur de consigne pour la température ambiante (TS) peut être réglée par l'actionnement incrémental de l'actionneur (S1) et, lorsque la valeur de consigne pour la température ambiante (TS) est atteinte, la valeur de position de la vanne réglée respective peut être transmise à l'unité de commande (40a-l) via l'électronique de commande et de retour (RE), la valeur de consigne de la température ambiante (TS) peut être réglée et la valeur de position de vanne réglée respective peut être renvoyée à l'unité de commande (40a-l) via l'électronique de commande et de rétroaction (RE) lorsque la valeur de consigne de la température ambiante (TS) est atteinte et l'équilibrage hydraulique adaptatif peut être réalisé par un réglage commandé dans le temps, en particulier continu, de la valeur de position de vanne au moyen de l'unité de commande (40a-l), en particulier un réglage continu de la valeur de position de vanne, **caractérisé par le fait que** intègre le système de chauffage dans un réseau de distribution comprenant plusieurs sections, les sections ayant des lignes de chauffage indépendantes (20a, b, c) chacune avec au moins un consommateur (V1), les lignes de chauffage alimentent chacune un certain nombre d'appartements (30a-l) et le réseau de distribution a au moins une unité de contrôle de réseau (NE) pour l'équilibrage hydraulique dynamique dans l'ensemble du réseau de distribution, dans lequel l'unité de contrôle de réseau (NE) contrôle le système de chauffage directement via les unités de contrôle (40a-l) ou via les unités de contrôle centrales.

2. Système de chauffage (10) selon la revendication 1, **caractérisé par le fait qu'**au moins un deuxième consommateur est prévu et que l'unité de commande (40a-l) pour le réglage de la valeur de consigne de la température ambiante (TS) émet des signaux de commande pour le réglage de la valeur de position de vanne respective à l'électronique de commande et de rétroaction (RE) des consommateurs respectifs (V1) et, dans l'unité de commande (40a-l), après égalisation des valeurs de position des vannes du premier et du deuxième consommateur (V1), une sortie des valeurs individuelles de position des vannes vers l'électronique de commande et de retour (RE) du premier et du deuxième consommateur (V1) est fournie pour le réglage de la température ambiante et les consommateurs (V1), en particulier dans l'électronique de commande et de retour (RE) du premier et du deuxième consommateur (V1), sont fournis pour le réglage de la température ambiante. Les consommateurs (V1) sont disposés en particulier dans des pièces séparées et un couplage est prévu directement avec une unité de commande centrale ou par l'intermédiaire d'une unité de commande (40a-l) respectivement affectée aux consommateurs et dans laquelle dans l'unité de commande du réseau (NE), les unités de commande centrales ou les unités de commande (40a-l), un comportement thermique temporel peut de préférence être mémorisé, un comportement thermique temporel peut de préférence être stocké via des profils de valeurs de consigne récupérables pour la température ambiante et l'équilibrage hydraulique adaptatif peut être effectué en fonction des profils de valeurs de consigne pour la température ambiante et une adaptation du comportement thermique temporel est prévue en fonction de l'heure de la journée, de l'utilisation de la pièce, de la température extérieure, des courbes de température saisonnières, de l'orientation de la pièce et/ou de la conception.

3. Système de chauffage (10) selon l'une des revendications précédentes, **caractérisé en ce que** l'actionneur (S1) est conçu comme un moteur pas à pas qui a une résolution de pas comprise entre 0 et 1000 pas, en particulier entre 0 et 800 pas, de préférence entre 0 et 600 pas, de préférence encore entre 0 et 300 pas, dans lequel la vanne de chauffage (HV1) est conçue en particulier comme une vanne à moteur pas à pas et l'actionneur (S1) est fourni en tant que partie de la vanne à moteur pas à pas.

4. Système de chauffage (10) selon l'une des revendications précédentes, **caractérisé par le fait qu'**en plus des profils de valeurs de consigne pour la température ambiante, une rampe de température de consigne est prévue et une vitesse d'actionnement de l'actionneur (S1) est prévue en fonction de la rampe de température de consigne et/ou le dispositif de détection (EV) est de préférence conçu comme un dispositif de mesure de la température indépendant ou comme un dispositif de mesure de la température intégré dans la vanne de chauffage (HV1) ou dans un thermostat d'ambiance.

5. Système de chauffage (10) selon l'une des revendications précédentes, **caractérisé par le fait que** l'unité de commande du réseau (NE), l'unité de commande (40a-l) et/ou l'unité de commande centrale sont disposées de manière décentralisée et sont intégrées dans un réseau de données ou que l'unité de commande du réseau (NE), l'unité de commande (40a-l) et/ou l'unité de commande centrale sont conçues pour être opérationnelles sur un serveur (50) ou un serveur virtuel et sont transmises via l'unité de commande du réseau (NE) respective, l'unité de commande (40a-l) et/ou l'unité de commande centrale, l'unité de commande (40a-l) et/ou l'unité de commande centrale sont conçues pour fonctionner sur un serveur (50) ou un serveur virtuel et un signal de commande pour la source de chauffage et/ou la pompe de circulation ou de chaleur (21a, b, c) peut être émis selon les besoins via l'unité de commande du réseau (NE), l'unité de commande (40a-l) ou l'unité de commande centrale afin d'augmenter ou de réduire la puissance d'un chauffage ou d'une pompe respectif.

6. Procédé de réalisation d'un équilibrage hydraulique automatique et adaptatif dans un système de chauffage (10) selon l'une des revendications 1 à 5, comprenant les étapes suivantes :
a. Détection d'une valeur réelle actuelle de la température ambiante (TI 1-4) et transmission de la valeur réelle de la température ambiante (TI 1-4) à une unité de commande (40a-l),
b. Comparaison de la valeur réelle de la température ambiante (TI 1-4) avec une valeur de consigne de la température ambiante (TS) enregistrée dans l'unité de commande (40a-l),
c. Dérivation d'une valeur de position de la vanne à partir de l'écart entre la valeur de consigne de la température ambiante (TS) et la valeur réelle de la température ambiante (TI 1-4),
d. Sortie d'un signal de commande vers une électronique de commande et de rétroaction (RE) affectée à une vanne de chauffage (HV1),
e. Actionnement d'un actionneur (S1) de la vanne de chauffage (HV1) par l'électronique de commande et de rétroaction (RE) pour régler la valeur de la position de la vanne sur la vanne de chauffage (HV1),
f. Retour de la valeur de la position de la vanne à l'unité de contrôle (40aI),
g. Répéter les étapes a.) à f.) jusqu'à ce que la valeur de consigne de la température ambiante (TS) soit atteinte,
dans lequel, en particulier, la valeur de consigne de la température ambiante (TS) représente un comportement thermique dans le temps, notamment en fonction de l'heure de la journée, de l'utilisation de la pièce, de la température extérieure, des courbes de température saisonnières, de l'orientation et/ou de la conception de la pièce, et/ou le réglage s'effectue en continu ou à des intervalles de temps définis (ZI1-4) et/ou, de préférence, plusieurs vannes de chauffage interconnectées (HV1) sont prévues, et l'unité de commande (HV2) commande les actionneurs (S1) des vannes de chauffage respectives (HV1) de manière à ce que la valeur de consigne de la température ambiante (TS) soit atteinte par un ajustement individuel des valeurs de position des vannes de chauffage respectives (HV1), dans lequel une ouverture et/ou une fermeture indépendante des vannes de chauffage respectives (HV1) est effectuée et/ou le système de commande prend en compte différents incidents de charge survenant aux vannes de chauffage (HV1) au cours de l'équilibrage, **caractérisé en ce qu'**un équilibrage hydraulique adaptatif est effectué dans un système de chauffage de bâtiment équipé d'un réseau de distribution comprenant plusieurs sections, dans lequel les sections ont des lignes de chauffage indépendantes (20a, b, c) chacune avec au moins un consommateur (V1) et les lignes de chauffage alimentent chacune un certain nombre d'appartements (30a-l) et dans lequel les étapes a.) à f.) sont chacune effectuées dans des sections individuelles d'un réseau de distribution et l'équilibrage pour l'ensemble du réseau est effectué par une unité de contrôle du réseau (NE), dans laquelle le réseau de distribution comporte en particulier plusieurs unités de contrôle (40a-l) ou des unités de contrôle centrales de niveau supérieur et un couplage de données de l'unité de contrôle du réseau (NE) avec plusieurs unités de contrôle (40a-l) et/ou des unités de contrôle centrales est prévu et dans laquelle le réseau de distribution ou les sections comportent plusieurs lignes de chauffage (20a, b, c) alimentées en particulier par une source de chauffage central, et l'au moins une unité de contrôle du réseau (NE) et une pluralité d'unités de contrôle (40a-l) ou d'unités de contrôle central effectuent l'équilibrage à travers les lignes de chauffage (20a, b, c) et l'unité de contrôle du réseau (NE) émet les signaux de contrôle soit directement, soit par l'intermédiaire des unités de contrôle (40a-l) et/ou des unités de contrôle centrales, à l'électronique de contrôle et de rétroaction (RE) des vannes de chauffage (HV1), dans laquelle l'unité de contrôle du réseau (NE), les unités de contrôle (40a-l) ou les unités de contrôle centrales afin d'atteindre les valeurs de consigne pour la température ambiante (TS) et, en fonction de la charge requise dans chaque cas, émet un signal de contrôle pour la source de chauffage et/ou la (les) pompe(s) de circulation ou de chaleur (21a, b, c) selon les besoins afin d'augmenter ou de réduire la puissance du chauffage et/ou de la pompe.

7. Procédé selon la revendication 6, **caractérisé par le fait que** les rampes de température permettant d'atteindre les valeurs de consigne de la température ambiante (TS) sont enregistrées dans l'unité de commande (40a-l) et que les actionneurs (S1) sont commandés en fonction des rampes de température et/ou que l'actionneur (S1) est actionné par étapes avec une résolution de pas comprise entre 0 et 1000 pas, en particulier entre 0 et 800 pas, de préférence entre 0 et 600 pas, de manière particulièrement préférée entre 0 et 300 pas.

8. Procédé selon l'une des revendications 6 ou 7, **caractérisé par le fait que** les signaux de commande sont transmis sans fil, en particulier via une connexion W-LAN, la radio, Bluetooth ou un réseau téléphonique ou mobile et/ou l'unité de commande du réseau (NE), les unités de commande (40a-l) et/ou les unités de commande centrales sont fournies de manière décentralisée ou sont intégrées dans un réseau de données ou l'unité de commande du réseau (NE), l'unité de commande (40a-l) et/ou l'unité de commande centrale sont exploitées sur un serveur (50) ou un serveur virtuel, de sorte que la commande simultanée de plusieurs systèmes de chauffage (11) et/ou réseaux de distribution s'effectue par l'intermédiaire d'un serveur (50) du réseau.

9. Procédé mis en oeuvre par ordinateur pour l'entraînement d'un réseau neuronal artificiel (RNA) pour l'exécution d'un réglage hydraulique adaptatif selon l'une quelconque des revendications 6 à 8 dans un système de chauffage selon l'une quelconque des revendications 1 à 5, qui prédit au moins une valeur de position de vanne pour atteindre une valeur de consigne d'une température ambiante (TS) dans un système de chauffage (10), dans lequel une intégration du système de chauffage dans un réseau de distribution comprenant une pluralité de sections est prévue et les sections comprennent des lignes de chauffage indépendantes (20a, b, c) ayant chacune au moins un consommateur (V1) et les lignes de chauffage alimentant chacune un certain nombre d'appartements (30a-l), le comportement de l'RNA étant **caractérisé par** un ensemble de paramètres, avec les étapes suivantes
• un ensemble d'ensembles de données d'apprentissage est fourni, dans lequel chaque ensemble de données d'apprentissage pour une valeur de position de vanne comprend un ensemble de paramètres caractérisant la réalisation d'une valeur de consigne d'une température ambiante (TS), au moins une mesure pour l'actionnement incrémentiel de l'actionneur (S1), qui est nécessaire pour atteindre une valeur d'ouverture de la vanne de chauffage (HV1) ;
• Pour chaque ensemble de données d'apprentissage, l'ensemble de paramètres qu'il contient et la mesure de l'actionnement incrémental de l'actionneur (S1) qu'il contient sont transmis à l'RNA en tant qu'entrées afin d'obtenir une prédiction et/ou une classification pour au moins une valeur d'ouverture de la vanne de chauffage (HV1) en tant que sortie ;
• la prédiction et/ou la classification de la valeur d'ouverture de la vanne de chauffage (HV1) est comparée à la valeur de la valeur d'ouverture de la vanne de chauffage (HV1) contenue dans l'ensemble de données d'apprentissage ;
• Un actionnement incrémental de l'actionneur (S1) est évalué, qui dépend d'un écart déterminé dans la comparaison ;
les paramètres et/ou les ensembles de données d'apprentissage de l'RNA sont adaptés à l'objectif d'optimisation consistant à améliorer la valeur de l'actionnement incrémentiel de l'actionneur (S1) et par conséquent l'ensemble de données d'apprentissage contient en outre, à titre facultatif, les éléments suivants
• une identification du lieu d'installation de la vanne de chauffage (HV1) dans le système de chauffage (10) et/ou
• une identification de la position du consommateur (V1) dans une ligne de chauffage (20a, b, c) et/ou
• une mesure de la température ambiante au moment du réglage de la valeur d'ouverture de la vanne de chauffage (HV1), et/ou
• une information sur la façon dont le système de chauffage (10) est construit, et/ou
• une information sur le comportement de la charge dans le système de chauffage (10) et/ou
• au moins des extraits de données de planification pour les lignes de chauffage (20a, b, c) ou le bâtiment (100) à chauffer, un nombre d'appartements (30a-l) ou le local à chauffer, et/ou
• une information sur les vannes de chauffage (HV1) présentes dans le système de chauffage (10) et couplées les unes aux autres, et/ou
• une information sur la proportion d'une quantité totale de chaleur ou d'une pression dans le système de chauffage (10) qui est disponible à la vanne de chauffage respective (HV1) et/ou
• une information sur la puissance maximale que peut fournir le générateur de chaleur affecté au système de chauffage (10), en particulier le brûleur (11) ou la pompe de circulation ou de chaleur (21a, b, c) affectée au système de chauffage (10), en tant qu'autres données à fournir au CN.

10. Réseau de neurones artificiels, RNA, entraîné avec la méthode selon la revendication 9.

11. Ensemble de données de paramètres caractérisant un RNA obtenu par la méthode selon la revendication 9.

12. Méthode mise en oeuvre par ordinateur pour prédire et/ou classer la valeur de réglage d'une vanne de chauffage (HV1) dans un système de chauffage (10) selon l'une des revendications 1 à 5, dans laquelle l'intégration du système de chauffage dans un réseau de distribution ayant une pluralité de sections est prévue avec les sections ayant des lignes de chauffage indépendantes (20a, b, c) ayant chacune au moins un consommateur (V1), avec les lignes de chauffage (20a, b, c) alimentant chacune un certain nombre d'appartements (30a-l), avec les étapes suivantes :
• Un ensemble de paramètres caractérisant la valeur SET requise de la température ambiante (TS) est déterminé ;
• au moins une mesure de la valeur de commande de chaque vanne de chauffage (HV1) dans le système de chauffage (10) est déterminée ;
• les paramètres et la mesure de la valeur d'actionnement d'une vanne de chauffage respective (HV1) dans le système de chauffage (10) sont transmis à un RNA entraîné en tant qu'entrées ;
au moins une prédiction et/ou une classification pour une mesure de la valeur de réglage de la vanne pour atteindre la valeur de consigne de la température ambiante (TS) dans le système de chauffage (10) ou la ligne de chauffage (20a, b, c) est récupérée en tant que sortie de l'RNA, dans laquelle l'RNA est éventuellement fourni avec les informations suivantes :
• une identification de l'endroit où au moins une vanne de chauffage (HV1) a été installée, et/ou
• une mesure de la température ambiante ou de la valeur réelle de la température ambiante (TI1-4) sur le lieu d'installation de la vanne de chauffage (HV1) est fournie en entrée et/ou, de préférence, en réponse au fait que la valeur de consigne de la température ambiante (TS) n'est pas atteinte avec une valeur de réglage de la vanne d'une première vanne de chauffage (HV1) prédite pour un premier lieu d'installation, une autre prédiction et/ou classification pour une valeur de position de la vanne d'une deuxième vanne de chauffage (HV1), qui est fournie sur un deuxième lieu d'installation, est récupérée en tant que sortie d'un RNA entraîné.

13. Un ou plusieurs programmes d'ordinateur comprenant des instructions lisibles par machine qui, lorsqu'elles sont exécutées sur un ou plusieurs ordinateurs et/ou sur une ou plusieurs unités de contrôle (40a-l) et/ou sur un ou plusieurs serveurs (50), amènent le ou les ordinateurs et/ou la ou les unités de contrôle (40a-l) et/ou le ou les serveurs (50) à exécuter une méthode selon la revendication 12.

14. Support de données lisible par machine et/ou produit de téléchargement comprenant un ou plusieurs programmes informatiques selon la revendication 13.
